(19) Europäisches Patentamt
European Patent Office
Office européen des brevets

(11) **EP 4 603 538 A1**

(12) **EUROPEAN PATENT APPLICATION**
published in accordance with Art. 153(4) EPC

(43) Date of publication:
**20.08.2025 Bulletin 2025/34**

(21) Application number: **23877343.6**

(22) Date of filing: **12.10.2023**

(51) International Patent Classification (IPC):
**C08L 25/04** (2006.01)    **C08J 5/00** (2006.01)
**C08J 11/00** (2006.01)    **C08L 51/04** (2006.01)

(52) Cooperative Patent Classification (CPC):
**C08J 5/00; C08J 11/00; C08L 25/04; C08L 51/04;**
**Y02W 30/62**

(86) International application number:
**PCT/JP2023/037111**

(87) International publication number:
**WO 2024/080342 (18.04.2024 Gazette 2024/16)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**KH MA MD TN**

(30) Priority: **12.10.2022 JP 2022164283**

(71) Applicant: **PS Japan Corporation**
**Tokyo 112-0002 (JP)**

(72) Inventor: **KITAYAMA Masahiro**
**Tokyo 100-0006 (JP)**

(74) Representative: **D Young & Co LLP**
**3 Noble Street**
**London EC2V 7BQ (GB)**

(54) **RECYCLED STYRENE-BASED RESIN COMPOSITION, MOLDED ARTICLE THEREOF, AND CARTRIDGE**

(57) The problem to be solved by the present disclosure is to provide a regenerated styrene-based resin composition that reduces environmental impact, suppresses the reduction in mechanical strength and chemical resistance, and exhibits excellent external appearance and an excellent heat creep resistance characteristic, and a molded article using the same. The present disclosure is a regenerated styrene-based resin composition containing a recycled polystyrene-based resin (A) that includes a toluene-insoluble fraction (1) after an osmium tetroxide treatment, and a rubber-modified polystyrene-based resin (B) that includes rubbery polymer particles (b2) forming the domain phase and a polystyrene-based resin (b1) forming the polymer matrix phase, wherein the amount of the toluene-insoluble fraction (1) after the osmium tetroxide treatment is more than 0 to 10 mass% relative to the entire regenerated styrene-based resin composition.

**EP 4 603 538 A1**

**Description**

TECHNICAL FIELD

The present disclosure relates to a regenerated styrene-based resin composition, and a molded article molded using the regenerated styrene-based resin composition and a cartridge.

BACKGROUND

Styrene-based resins such as polystyrene are known as materials with low environmental impact, because they are odorless, tasteless, suitable for food applications, and produce only carbon dioxide and water vapor upon complete combustion. In particular, waste styrene-based resins such as inner loss generated in production processes, including molding plants for styrene-based resins, are easy to recycle because the quality and composition are known.

However, waste styrene-based resins collected from the market often contain various resins other than styrene-based resins, metallic powders, deposits, or foreign matters. Thus, molded articles made simply by recycling these waste styrene-based resins often fail to maintain the same mechanical properties as those made with new styrene-based resins. For example, since styrene-based resins are widely used in components such as TV housings, partitions for refrigerator shelves, or cartridges for multifunctional printers, material recycling technologies for these components are in demand.

PTL 1 discloses a technology for preventing a decline in aesthetic properties by using a regenerated styrene-based resin composition containing used styrene-based resin and zeolite, wherein zeolite adsorbs additives for resins such as dibutylhydroxytoluene molecules or dibutylhydroxytoluene dimers that cause resin buildup on molds and yellowing over time during molding. PTL 2 discloses a technology for providing polystyrene-based resin with excellent rigidity, impact strength, moldability, and flame retardancy equivalent to unused polystyrene resin. This involves a recycled polystyrene-based resin containing used resin waste (C) including a polystyrene resin containing rubber components and flame retardants and a polystyrene resin without rubber components, styrene-based thermoplastic elastomers (D), a brominated flame retardant (E), and a polyfluoroolefin (F).

CITATION LIST

Patent Literature

    PTL 1: JP 2020-007424 A
    PTL 2: JP 2018-087261 A

SUMMARY

(Technical Problem)

While the technologies disclosed in PTLs 1 and 2 address mechanical strength and flame retardancy, they are insufficient regarding chemical resistance and external appearance.

Thus, the problem to be solved by the present disclosure is to provide a regenerated styrene-based resin composition that reduces environmental impact, prevents the reduction in mechanical strength, and exhibits excellent external appearance and a molded article using the same, and a cartridge.

(Solution to Problem)

Through extensive research to address the above-described issue, the present inventors discovered that the amount of components causing the reduction in the physical properties of the styrene-based resin composition included in a recycled polystyrene-based resin (A) can be quantitatively determined via an osmium tetroxide treatment. Moreover, in a composition obtained by incorporating a specified amount of virgin rubber-modified polystyrene (commonly known as HIPS) into a recycled polystyrene-based resin (A), by controlling the toluene-insoluble fraction (1) after the osmium tetroxide treatment derived from the recycled polystyrene-based resin (A) to a specified amount, a regenerated styrene-based resin composition was successfully obtained which prevents the reduction in mechanical strength and exhibits excellent external appearance and a molded article using the same, and a cartridge, thereby completing the present disclosure. Specifically, the present disclosure is as follows:

[1] The present disclosure is a regenerated styrene-based resin composition comprising a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase,
more than 0 to 10 mass% of the toluene-insoluble fraction (1) after the osmium tetroxide treatment being contained relative to an entire regenerated styrene-based resin composition.
[2] The present disclosure is a regenerated styrene-based resin composition comprising a recycled polystyrene-based resin (A) that includes a toluene-insoluble fraction (1) after the osmium tetroxide treatment, and a polystyrene-based resin (b1) and rubbery polymer particles (b2),

> wherein the regenerated styrene-based resin composition comprises less than 55 to 97.9 mass% of a polymer component including the polymer matrix portion (a1) of the recycled polystyrene-based resin (A) and the polystyrene-based resin (b1);
> 2.1 to 35 mass% of a rubber component including the rubbery polymer particles (b2); and
> more than 0 to 10 mass% of the toluene-insoluble fraction (1) after the osmium tetroxide treatment after subjecting the recycled polystyrene-based resin (A) to an osmium tetroxide treatment.

[3] The regenerated styrene-based resin composition according to [1],
wherein dispersed matters in a composition dispersion of the regenerated styrene-based resin composition dissolved and dispersed in N,N-dimethylformamide satisfy the following formula (1):
[Math. 1]

$$0 < (|d_{84\%} - d_{16\%}|) / 2 < 2 \qquad (1)$$

(where $d_{84\%}$ is an 84% cumulative diameter on an integral distribution curve of a particle size of the dispersed matters measured by laser diffraction, and $d_{16\%}$ is a 16% cumulative diameter on the integral distribution curve of the particle size of the dispersed matters measured by laser diffraction.)
[4] The regenerated styrene-based resin composition according to any one of [1] to [3], further comprising a styrene-based resin (C).
[5] The regenerated styrene-based resin composition according to any one of [2] or [4], wherein a weight average molecular weight (Mw) of the polymer component is in a range of 100,000 to 350,000.
[6] The regenerated styrene-based resin composition according to any one of [1] or [4], wherein an average particle size of all rubbery polymer particles in the regenerated styrene-based resin composition is in a range of 1.6 to 3.2 μm.
[7] The regenerated styrene-based resin composition according to any one of [1] to [6], wherein the all rubbery polymer particles in the regenerated styrene-based resin composition comprise conjugated diene-based monomer units, and a content of the conjugated diene-based monomer units is 2 to 15 mass% relative to the entire regenerated styrene-based resin composition.
[8] The regenerated styrene-based resin composition according to any one of [1] to [7], comprising one or more selected from the group consisting of antioxidants, pigments, flame retardants, additives, mineral oils, vegetable oils, and lubricants.
[9] The regenerated styrene-based resin composition according to any one of [1] to [8], wherein a content of the all rubbery polymer particles is 2.1 to 35 mass% relative to the entire regenerated styrene-based resin composition.
[10] A method of producing a regenerated styrene-based resin composition according to any one of [1] to [9], comprising:

> a step (I) of preparing a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase; and
> a step (II) of melt-kneading the recycled polystyrene-based resin (A) and the rubber-modified polystyrene-based resin (B).

[11] A molded article produced by molding the regenerated styrene-based resin composition according to any one of [1] to [9].
[12] A cartridge that can be attached to and detached from an image production apparatus that produces multicolor or monochrome images on a recording medium by an electrophotographic method, the cartridge comprising:

> a cartridge main body, a photosensitive drum, and charging means for charging a surface of the photosensitive drum,

wherein the cartridge main body comprises a regenerated styrene-based resin composition comprising a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase, and more than 0 to 10 mass% of the toluene-insoluble fraction (1) after the osmium tetroxide treatment is contained relative to the entire regenerated styrene-based resin composition.

(Advantageous Effect)

According to the present disclosure, it is possible to provide a regenerated styrene-based resin composition that suppresses the reduction in mechanical strength and chemical resistance and exhibits excellent external appearance and an excellent heat creep resistance characteristic.

According to the present disclosure, it is also possible to provide a molded article and a cartridge that suppress the reduction in mechanical strength and chemical resistance and exhibit excellent external appearance and an excellent heat creep resistance characteristic using the regenerated styrene-based resin composition.

BRIEF DESCRIPTION OF THE DRAWINGS

[FIG. 1] FIG. 1 is a schematic view illustrating one example of a cartridge of a present embodiment;

[FIG. 2] FIG. 2 is a cross-sectional view of the cartridge illustrated in FIG. 1; and

[FIG. 3] FIG. 3 is a schematic diagram illustrating one example in which the cartridge of the present embodiment is separated into a drum cartridge and a toner cartridge.

DETAILED DESCRIPTION

Hereinafter, an embodiment of the present disclosure (hereinafter referred to as "the present embodiment") will be described in detail. However, the scope of the present disclosure is not limited to the descriptions below and can be implemented with various modifications within the scope of the gist thereof.

[Regenerated styrene-based resin composition]

A regenerated styrene-based resin composition of the present embodiment contains a recycled polystyrene-based resin (A) that includes a toluene-insoluble fraction (1) after an osmium tetroxide treatment, and a rubber-modified polystyrene-based resin (B) that includes rubbery polymer particles (b2) forming the domain phase and polystyrene-based resin (b1) forming the polymer matrix phase. The amount of the toluene-insoluble fraction after the entire regenerated styrene-based resin composition is subjected to an osmium tetroxide treatment is more than 0 mass% to 10 mass% relative to the entire regenerated styrene-based resin composition.

This enables the provision of a regenerated styrene-based resin composition that suppresses the reduction in mechanical strength and exhibits excellent external appearance.

Another aspect of the regenerated styrene-based resin composition of the present disclosure includes a recycled polystyrene-based resin (A) that contains a toluene-insoluble fraction (1) after an osmium tetroxide treatment, and a polystyrene-based resin (b1) and rubbery polymer particles (b2),

wherein the regenerated styrene-based resin composition includes less than 55 to 97.9 mass% of a polymer component including the polymer matrix portion (a1) of the recycled polystyrene-based resin (A) and the polystyrene-based resin (b1), and

2.1 to 35 mass% of a rubber component including the rubbery polymer particles (b2), and

the amount of the toluene-insoluble fraction (1) after the osmium tetroxide treatment is more than 0 to 10 mass% relative to the entire regenerated styrene-based resin composition.

This enables the provision of a regenerated styrene-based resin composition that suppresses the reduction in mechanical strength and chemical resistance and exhibits excellent external appearance and an excellent heat creep resistance characteristic.

In the present embodiment, the rubbery polymer particles (b2) and the polystyrene-based resin (b1) may be included as a rubber-modified polystyrene-based resin (B) that contains the rubbery polymer particles (b2) as the domain phase and the polystyrene-based resin (b1) as the polymer matrix phase, in the regenerated styrene-based resin composition.

The polymer component, the polymer matrix portion (a1), and the polystyrene-based resin (b1) essentially contain styrene-based monomer units, and include unsaturated carboxylic acid-based monomer units described later, if necessary. The polymer component is a mixture that includes the polymer matrix portion (a1) of the recycled polystyrene-based resin (A), which contains a toluene-insoluble fraction (1) after an osmium tetroxide treatment, and the polystyrene-based resin (b1). The polystyrene-based resin (b1) and the rubbery polymer particles (b2) may be materials derived from rubber-modified polystyrene-based resin (B).

The unsaturated carboxylic acid-based monomers are preferably (meth)acrylic acid monomers and (meth) acrylic acid ester monomers. Examples of such (meth)acrylic acid monomers include acrylic acid or methacrylic acid, for example. Furthermore, examples of the (meth)acrylic acid ester monomer units include, for example, methyl (meth) acrylate, ethyl (meth)acrylate, propyl (meth)acrylate, (n-butyl) (meth)acrylate, (t-butyl) (meth)acrylate, (isobutyl) (meth) acrylate, cyclohexyl (meth)acrylate, benzyl (meth)acrylate, (n-octyl) (meth)acrylate, (2-ethylhexyl) (meth)acrylate, decyl (meth)acrylate, and stearyl (meth)acrylate. These may be used either alone or in combination.

Additionally, the recycled polystyrene-based resin (A) may contain rubbery polymer particles (a2). In other words, the recycled polystyrene-based resin (A) may include used rubber-modified polystyrene-based resin. Therefore, in the case where rubbery polymer particles (a2) are contained in the recycled polystyrene-based resin (A), the recycled polystyrene-based resin (A) includes the polymer matrix portion (a1) and the rubbery polymer particles (a2) of the recycled polystyrene-based resin (A).

In the case where rubbery polymer particles (a2) are contained in the recycled polystyrene-based resin (A), the rubber component includes both the rubbery polymer particles (a2) and the rubbery polymer particles (b2).

When the components of the regenerated styrene-based resin composition of the present embodiment is categorized morphologically, the regenerated styrene-based resin composition can be categorized into the polymer component, the rubber component, the toluene-insoluble fraction (1) after the osmium tetroxide treatment (i.e., the mixed substances derived from the recycled polystyrene-based resin (A)), and additional components mixed into the composition that are added if necessary.

The polymer component includes the polymer matrix portion (a1) derived from the recycled polystyrene-based resin (A), the polystyrene-based resin (b1) derived from the rubber-modified polystyrene-based resin (B), and the styrene-based resin (C) that is added if necessary. The rubber component includes the rubbery polymer particles (b2) derived from the rubber-modified polystyrene-based resin (B), and the rubbery polymer particles (a2) derived from the recycled polystyrene-based resin (A) that are added if necessary. Furthermore, the toluene-insoluble fraction (1) after the osmium tetroxide treatment includes mixed substances derived from the recycled polystyrene-based resin (A) (for example, other resins (e.g., olefin resins such as polyethylene-based resins or polypropylene-based resins), inorganic substances (e.g., metal powder or silica), pigments, deposits, or foreign matters).

In another expression, the regenerated styrene-based resin composition can be classified into a polymer matrix phase composed of styrene-based polymers (including, for example, the above polymer matrix portion (a1), the above polystyrene-based resin (b1), and the styrene-based resin (C) that does not contain rubbery polymer particles if necessary); a rubber component that includes rubbery polymer particles (b2) dispersed in the polymer matrix phase (e.g., in an island-in-sea morphology); and mixed substances derived from the recycled polystyrene-based resin (A) (for example, other resins (e.g., olefin resins such as polyethylene-based resins or polypropylene-based resins), inorganic substances (e.g., metal powder or silica), pigments, deposits, or foreign matters).

Therefore, the polymer matrix phase composed of the styrene-based polymer is referred to in this specification as the "polymer component."

The "rubber component" is defined as the component composed of the rubbery polymer particles (b2), and the rubbery polymer particles (a2) that are contained if necessary.

Moreover, the mixed substances derived from the recycled polystyrene-based resin (A) remain insoluble in toluene even after the osmium tetroxide treatment described later. The amount of these ingredients was confirmed to remain constant before and after toluene dissolution treatment following the osmium tetroxide treatment. On the other hand, the polymer component is soluble in toluene. Furthermore, it was confirmed that the rubbery polymer particles (b2) and (a2), which contain conjugated diene-based monomer units, are insoluble in toluene but become soluble in toluene after the osmium tetroxide treatment described later. The polymer phase contained in the rubbery polymer particles (b2) and (a2) (e.g., the polymer phase in rubbery polymer particles with a core-shell structure or a salami structure) and the graft polymer chains (styrene-based polymers) with styrene-based monomers on the surface of the rubbery polymer particles are collectively referred to as the "occluded components" in this specification. For convenience, the "polymer component" in this specification refers to the component composed of the above styrene-based polymers and soluble in toluene in the regenerated styrene-based resin composition before the osmium tetroxide treatment is performed. In contrast, the "occluded components" are defined as follows. The "occluded components" are components defined by subtracting the sum of the amount of the toluene-insoluble fraction after the osmium tetroxide treatment is on fraction insoluble in toluene (i.e., the toluene-insoluble fraction (1) after the osmium tetroxide treatment) and the amount of the rubbery polymer, from the amount of the fraction insoluble in toluene in the regenerated styrene-based resin composition before the osmium tetroxide treatment. In this specification, the "toluene-insoluble fraction (1) after the osmium tetroxide treatment" refers to the fraction obtained by dissolving the regenerated styrene-based resin composition or the recycled polystyrene-based resin (A) in toluene, separating the resultant into the toluene-soluble fraction and toluene-insoluble fraction, performing an osmium tetroxide treatment on the toluene-insoluble fraction to cleave the carbon-carbon double bonds, further dissolving the treated fraction in toluene, and separating the resultant into the toluene-soluble fraction and toluene-insoluble fraction. The toluene-insoluble fraction obtained after this process is referred to as the "toluene-insoluble fraction (1) after an osmium tetroxide treatment." For convenience of explanation in this specification, numbers are assigned to distinguish between the toluene-insoluble fraction (2) before the osmium tetroxide treatment and the other components.

It was discovered that when the size of mixed substances derived from the recycled polystyrene-based resin (A) exhibits a specific particle size distribution, it is less likely to become an initiation point for cracking, leading to the definition of the relational formula (1) described later.

In the regenerated styrene-based resin composition of the present embodiment, the upper limit of the content of the rubber component is preferably 35 mass% or less, less than 35 mass%, 30 mass% or less, 29 mass% or less, 28.7 mass% or less, 28.4 mass% or less, 28.1 mass% or less, 27.8 mass% or less, 27.4 mass% or less, 26 mass% or less, 25 mass% or less, 20 mass% or less, 15 mass% or less, 12 mass% or less, 10 mass% or less, 9 mass% or less, 8 mass% or less, 7 mass% or less, 5 mass% or less, 4.9 mass% or less, 4.8 mass% or less, 4.7 mass% or less, or 4.6 mass% or less relative to the entire regenerated styrene-based resin composition. On the other hand, the lower limit of the content of the rubber component is preferably 2.1 mass% or more, 2.7 mass% or more, 3.1 mass% or more, 3.7 mass% or more, 4 mass% or more, 6 mass% or more, 7 mass% or more, 8 mass% or more, 9 mass% or more, 9.3 mass% or more, 9.5 mass% or more, or 10 mass% or more relative to the entire regenerated styrene-based resin composition.

The above upper and lower values can be combined as appropriate.

When the content of the rubber component is within the above range, the effect of improving the heat creep resistance characteristic and chemical resistance is exhibited. The content of the rubber component is calculated, as described later, as the value obtained by subtracting the amount of the toluene-insoluble fraction (1) after the osmium tetroxide treatment from the amount of the toluene-insoluble fraction (2) before the osmium tetroxide treatment.

In the regenerated styrene-based resin composition of the present embodiment, the lower limit of the content of the polymer component is 64 mass% or more, more than 64 mass%, 65 mass% or more, 70 mass% or more, 75 mass% or more, or 80 mass% or more relative to the entire regenerated styrene-based resin composition. On the other hand, the upper limit of the content of the polymer component is less than 97.9 mass%, 97.5 mass% or less, 97 mass% or less, 96 mass% or less, 95 mass% or less, less than 95 mass%, 94.8 mass% or less, 94 mass% or less, 93 mass% or less, 92 mass% or less, 91 mass% or less, 90 mass% or less, or less than 90 mass% relative to the entire regenerated styrene-based resin composition.

The above upper and lower values can be combined as appropriate.

The content of the polymer component is calculated by subtracting the amount of the toluene-insoluble fraction (2) before the osmium tetroxide treatment from the entire amount of the regenerated styrene-based resin composition.

Furthermore, the polymer component may also include a styrene-based resin (C), in addition to the polymer matrix portion (a1) of the recycled polystyrene-based resin (A) and the polystyrene-based resin (b1).

In the polymer component of the present embodiment, it is preferable that the styrene-based monomer units account for 50 to 100 mass%, (meth)acrylic acid monomer units account for 0 to 20 mass%, and (meth)acrylic acid ester monomer units account for 0 to 50 mass%, and it is more preferable that the styrene-based monomer units account for 55 to 100 mass%, (meth)acrylic acid monomer units account for 0 to 15 mass%, and (meth)acrylic acid ester monomer units account for 0 to 45 mass%, relative to the entire polymer component.

In the present embodiment, the weight average molecular weight (Mw) of the entire polymer component is preferably 100,000 to 350,000, more preferably 100,000 to 300,000, even more preferably 110,000 to 280,000, still even more preferably 115,000 to 250,000, and most preferably 120,000 to 230,000. When the weight average molecular weight is in the range of 100,000 to 350,000, the resin that exhibits excellent practicality in terms of a balance between impact strength and fluidity is obtained.

The weight average molecular weight can be measured in terms of standard polystyrene using gel permeation chromatography.

The "recycled polystyrene-based resin (A)" in this specification contains the toluene-insoluble fraction (1) after the osmium tetroxide treatment. The content of the toluene-insoluble fraction (1) after the osmium tetroxide treatment may be 10 mass% or less, preferably more than 0 mass% to 5 mass%, and more preferably more than 0 mass% to 3 mass% relative to the entire recycled polystyrene-based resin (A). In another aspect, the content of the toluene-insoluble fraction (1) is preferably 0.1 to 6 mass%, and particularly preferably 1 to 6 mass% relative to the entire recycled polystyrene-based resin (A).

The "polystyrene-based resin (b1)" in this specification substantially does not contain the toluene-insoluble fraction (2) before the osmium tetroxide treatment and the toluene-insoluble fraction (1) after the osmium tetroxide treatment. The content of the toluene-insoluble fraction (1) after the osmium tetroxide treatment in the polystyrene-based resin (b1) may be less than 0.01 mass% relative to the entire polystyrene-based resin (b1) and is substantially below the detection limit.

The "styrene-based resin (C)" in this specification substantially does not contain the toluene-insoluble fraction (2) before the osmium tetroxide treatment and the toluene-insoluble fraction (1) after the osmium tetroxide treatment. The content of the toluene-insoluble fraction (1) after the osmium tetroxide treatment in the styrene-based resin (C) may be less than 0.01 mass% relative to the entire styrene-based resin (C) and is substantially below the detection limit.

The upper limit of the content of the recycled polystyrene-based resin (A) containing the toluene-insoluble fraction (1) after the osmium tetroxide treatment in the present embodiment is not particularly limited but it is preferably 99 mass% or less, 90 mass% or less, 80 mass% or less, 70 mass% or less, 65 mass% or less, 60 mass% or less, 50 mass% or less, or 40 mass% or less, relative to the entire regenerated styrene-based resin composition (100 mass%).

When the content of the recycled polystyrene-based resin (A) is 70 mass% or less, a more excellent impact resistance can be achieved.

On the other hand, the lower limit of the content of the recycled polystyrene-based resin (A) containing the toluene-insoluble fraction (1) after the osmium tetroxide treatment in the present embodiment is preferably 1 mass% or more, 10 mass% or more, 20 mass% or more, 30 mass% or more, 40 mass% or more, 50 mass% or more, or 60 mass% or more, relative to the entire regenerated styrene-based resin composition (100 mass%).

When the content of the recycled polystyrene-based resin (A) is 30 mass% or more, a further improved environmental load reduction can be exhibited. The upper limit and the lower limit of the content of the recycled polystyrene-based resin (A) can be combined arbitrarily.

The upper limit of the content of the rubber-modified polystyrene-based resin (B) in the present embodiment is preferably 99 mass% or less, 90 mass% or less, 80 mass% or less, 70 mass% or less, 60 mass% or less, 50 mass% or less, or 40 mass% or less, relative to the entire regenerated styrene-based resin composition (100 mass%).

When the content of the rubber-modified polystyrene-based resin (B) is 70 mass% or less, a further improved environmental load reduction can be exhibited.

On the other hand, the lower limit of the content of the rubber-modified polystyrene-based resin (B) in the present embodiment is preferably 1 mass% or more, 10 mass% or more, 20 mass% or more, 30 mass% or more, 40 mass% or more, 50 mass% or more, or 60 mass% or more, relative to the entire regenerated styrene-based resin composition (100 mass%).

When the content of the rubber-modified polystyrene-based resin (B) is 30 mass% or more, a more excellent impact resistance can be achieved. In addition, the upper limit and the lower limit of the content of the rubber-modified polystyrene-based resin (B) can be combined arbitrarily.

The upper limit of the content of the rubbery polymer particles (b2) in the present embodiment is preferably 35 mass% or less, 33 mass% or less, 30 mass% or less, 28 mass% or less, 26 mass% or less, 25 mass% or less, or 24 mass% or less, relative to the entire regenerated styrene-based resin composition (100 mass%).

The lower limit of the content of the rubbery polymer particles (b2) in the present embodiment is preferably 2.1 mass% or more, 2.5 mass% or more, 3 mass% or more, 5 mass% or more, 7 mass% or more, 9 mass% or more, or 11 mass% or more, relative to the entire regenerated styrene-based resin composition (100 mass%). The content of the rubbery polymer particles (b2) is calculated as the toluene-insoluble fraction described later.

(Preferred Form of Rubber Component)

The average particle size of the rubber component or the average particle size of all rubbery polymer particles contained in the regenerated styrene-based resin composition in the present embodiment is preferably 1.6 to 3.2 $\mu$m, and more preferably 1.7 to 2.8 $\mu$m from the perspective of improving impact resistance and chemical resistance.

In addition, the average particle size of all rubbery polymer particles contained in the rubber component or the regenerated styrene-based resin composition can be measured using the method for determining the average particle size of the rubbery polymer particles (b2), which is described later.

The average particle size of all rubbery polymer particles refers to the average particle size of the entire particles combining the rubbery polymer particles (b2) and the optionally included rubbery polymer particles (a2). When the average particle size and content of the rubbery polymer particles fall within the above-mentioned ranges, a good balance of improved impact resistance and rigidity can be achieved.

(Toluene-insoluble Fraction)

In the regenerated styrene-based resin composition of the present embodiment, the "toluene-insoluble fraction" refers to the component that remains undissolved when 1 g of the substance to be analyzed, such as the regenerated styrene-based resin composition or the recycled polystyrene-based resin (A), is added to 20 ml of toluene and shaken for 2 hours at 23 °C.

The "regenerated styrene-based resin composition or recycled polystyrene-based resin (A) before an osmium tetroxide treatment" refers to the regenerated styrene-based resin composition or the recycled polystyrene-based resin (A) that has not undergone an osmium tetroxide treatment. Accordingly, the toluene-insoluble fraction present in the regenerated styrene-based resin composition or the recycled polystyrene-based resin (A) before an osmium tetroxide treatment includes rubbery polymer particles (b2) contained in the rubber-modified polystyrene-based resin (B), components derived from the recycled polystyrene-based resin (A) (such as rubber other than the rubbery polymer particles (b2) (e.g., rubbery polymer particles (a2)), metals, other resins (e.g., olefin resins such as polyethylene-based resins or polypropylene-based resins), pigments, deposits, or foreign matters, etc.

On the other hand, the term "recycled polystyrene-based resin (A) containing a toluene-insoluble fraction (1) after the osmium tetroxide treatment" refers to a recycled polystyrene-based resin (A) containing the toluene-insoluble fraction remaining in the recycled polystyrene-based resin (A) that has been subjected to the osmium tetroxide treatment, in contrast to the recycled polystyrene-based resin (A) before the osmium tetroxide treatment.

The toluene-insoluble fraction in the regenerated styrene-based resin composition after the osmium tetroxide treatment or the recycled polystyrene-based resin (A) after the osmium tetroxide treatment includes components derived from the recycled polystyrene-based resin (A) (other resins (e.g., olefin resins such as polyethylene-based resins or polypropylene-based resins), inorganic substances (e.g., metal powder or silica), pigments, deposits, or foreign matters).

As demonstrated in the reference examples described later, it was confirmed that when virgin styrene-based materials containing unused styrene-based monomer units (e.g., styrene-based resin (C) or rubber-modified polystyrene-based resin (B) that are unused resins) were subjected to an osmium tetroxide treatment and the amount of toluene-insoluble fraction was then measured, these virgin materials substantially did not contain toluene-insoluble fraction. Therefore, the content of the toluene-insoluble fraction in the styrene-based virgin material after the osmium tetroxide treatment that is obtained by performing an osmium tetroxide treatment on the styrene-based virgin material is performed is preferably 0.01 mass% or less, more preferably 0.001 mass% or less, even more preferably 0.0001 mass% or less, and most preferably below the detection limit, relative to the entire composition or the styrene-based virgin material.

In the present embodiment, the method for measuring the amount of toluene-insoluble fraction in the regenerated styrene-based resin composition or the recycled polystyrene-based resin (A) is as follows. Into a sedimentation tube, 1 g of the regenerated styrene-based resin composition or the recycled polystyrene-based resin (A) to be measured is precisely weighed. Then, 20 mL of toluene is added, and the tube is shaken at 23 °C for 2 hours. Then, centrifugation is performed at 4 °C, a rotation speed of 20,000 rpm, and a centrifugal acceleration of $45,100 \times G$ for 60 minutes using a centrifuge (model SS-2050A, manufactured by Sakuma Seisakusho Co., Ltd., rotor: 6B-N6L). The sedimentation tube was slowly tilted to about 45 degrees, and the supernatant liquid was removed by decantation. The mass of the toluene-insoluble fraction was weighed, and this mass was designated as W1. Next, the resultant was vacuum-dried under conditions of 160 °C and a pressure of 3 kPa or lower for 1 hour. After cooling to room temperature in a desiccator, the mass of the toluene-insoluble fraction was accurately weighed, and this mass was designated as W2. Then, the toluene-insoluble fraction was recovered from the sedimentation tube.

The swelling index of the toluene-insoluble fraction was determined using the following formula. Swelling index of toluene-insoluble fraction = (W1 / W2)

(Osmium Tetroxide Treatment)

The osmium tetroxide treatment in the present embodiment refers to a chemical process that uses the oxidation reaction of osmium tetroxide, which adds two hydroxyl groups in a syn-fashion to carbon-carbon unsaturated bonds, such as alkene groups. A catalytic amount of osmium tetroxide and an oxidizing agent are added to compounds containing carbon-carbon unsaturated bonds, such as alkenyl groups (e.g., rubber components or toluene-insoluble fraction), to convert them into diols. Thereafter, peroxides that can be added together with osmium tetroxide may cleave carbon-carbon unsaturated bonds such as alkenyl groups. It was confirmed that when an osmium tetroxide treatment was applied to the regenerated styrene-based resin composition or the recycled polystyrene-based resin (A), the rubber components (conjugated diene structures) contained in the regenerated styrene-based resin composition or the recycled polystyrene-based resin (A) become soluble in a solvent (e.g., toluene), and mixed substances derived from the recycled polystyrene-based resin (A), such as other resins (e.g., olefin resins such as polyethylene-based resins or polypropylene-based resins), inorganic substances (e.g., metal powder or silica), pigments, deposits, or foreign matters, remained in the regenerated styrene-based resin composition or the recycled polystyrene-based resin (A).

Based on the above, in this specification, the mixed substances derived from the recycled polystyrene-based resin (A) that are mixed during the recovery of a recycled polystyrene-based resin (A) for reuse are defined as the toluene-insoluble fraction (1) after the osmium tetroxide treatment.

The osmium tetroxide treatment in the present embodiment is not particularly limited, as long as the rubber components (conjugated diene structures) contained in the regenerated styrene-based resin composition or the recycled polystyrene-based resin (A) can be solubilized in toluene. However, the osmium tetroxide treatment is preferably carried out according to the following procedure, for example.

The osmium tetroxide treatment in the present embodiment preferably includes a step (I) of preparing an osmium tetroxide decomposing agent and a step (II) of bringing the osmium tetroxide decomposing agent into contact with the toluene-insoluble fraction of the regenerated styrene-based resin composition or the recycled polystyrene-based resin (A).

As the step (I), it is preferred to mix 30 to 500 mg (e.g., 100 mg) of osmium tetroxide (VIII), 50 to 1,400 g (e.g., 200 g) of t-butyl hydroperoxide aqueous solution (concentration: 40 to 80 mass%, e.g., 70 mass%), and 90 to 1,500 ml (e.g., 300 ml) of a lower alcohol (e.g., t-butyl alcohol) to prepare an osmium tetroxide decomposing agent.

As the step (II), after a solution containing the toluene-insoluble fraction is prepared by dissolving the recovered toluene-insoluble fraction in an organic solvent (e.g., chloroform), the osmium tetroxide decomposing agent is added to the solution. It is preferred to contact the osmium tetroxide decomposing agent with the toluene-insoluble fraction under reflux at 70 to 90 °C (e.g., in a 90 °C water bath) for 10 to 30 minutes (e.g., 12 minutes).

Through the step (II), the unsaturated bonds, such as alkenes, contained in the toluene-insoluble fraction are subjected to decomposition treatment.

After the step (II), a recovery step (III) may be provided to recover the solid fraction and liquid fraction after the decomposition treatment. One example of the recovery step (III) preferably includes a precipitation step (IV) in which, after the solution containing the toluene-insoluble fraction to which the osmium tetroxide decomposing agent is added is cooled, methanol is added while stirring to precipitate the methanol-insoluble fraction due to the addition of methanol; and a washing step (V) in which the methanol-insoluble fraction and the liquid fraction are separated using a glass filter, and the recovered material, which is the methanol-insoluble fraction, is repeatedly washed with toluene, and the residue remaining on the glass filter is collected as the toluene-insoluble fraction.

In the regenerated styrene-based resin composition of the present embodiment, the toluene-insoluble fraction contained in the regenerated styrene-based resin composition after the osmium tetroxide treatment is more than 0 to 10 mass%, preferably 0.0001 to 5 mass%, more preferably 0.0001 to 3 mass%, even more preferably 0.0001 to 1 mass%, and particularly preferably 0.0001 to 0.5 mass%, relative to the entire regenerated styrene-based resin composition.

The toluene-insoluble fraction contained in the regenerated styrene-based resin composition after the osmium tetroxide treatment being within the range of more than 0 to 10 mass% is preferred from the perspective of impact resistance. Particularly, a toluene-insoluble fraction contained in the regenerated styrene-based resin composition being within the range of 0.0001 to 1 mass% is preferred from the perspectives of external appearance and various mechanical properties.

The following describes each component constituting the regenerated styrene-based resin composition of the present embodiment in detail.

(Recycled polystyrene-based resin (A))

The recycled polystyrene-based resin (A) in the present embodiment is a used polystyrene-based resin, which may be a so-called recovered waste polystyrene-based resin. More specifically, the recycled polystyrene-based resin (A) may be a material (pre-consumer material) that is reused after collecting scraps generated during the production process of products containing styrene-based resin, defective products containing styrene-based resin, unsold products containing a styrene-based resin, a styrene-based resin that has passed its quality assurance period, and styrene-based resin discarded prior to shipment. Alternatively, it may be a material (post-consumer material) that is reused after being once distributed to the market and collected after use by consumers.

The recycled polystyrene-based resin (A) in the present embodiment contains a toluene-insoluble fraction (1) after an osmium tetroxide treatment. The content of the toluene-insoluble fraction (1) after the osmium tetroxide treatment in the recycled polystyrene-based resin (A) is preferably more than 0 mass% and 35 mass% or less, more preferably more than 0 mass% and 25 mass% or less, even more preferably more than 0 mass% and 20 mass% or less, and particularly preferably more than 0 mass% and 10 mass% or less, relative to the entire recycled polystyrene-based resin (A).

There are no particular limitations on the recycled polystyrene-based resin (A) that can be used in the present disclosure as long as it is a polystyrene-based resin that contains 60 mass% or more of styrene-based monomer units relative to the entire recycled polystyrene-based resin (A), and the content of the toluene-insoluble fraction (1) after the osmium tetroxide treatment is more than 0 mass% and 35 mass% or less relative to the entire recycled polystyrene-based resin (A).

The recycled polystyrene-based resin (A) containing the toluene-insoluble fraction (1) after the osmium tetroxide treatment in the present disclosure may also contain particles of a rubbery polymer (a) (i.e., rubbery polymer particles (a2)).

Moreover, the recycled polystyrene-based resin (A) may include polystyrene-based resins recovered from used electronic appliances, etc. The polystyrene-based resins may also encompass those including known resins such as styrene-based elastomers, and inorganic fillers, such as talc, mica, wollastonite, calcium carbonate, barium sulfate, magnesium carbonate, clay, alumina, silica, calcium sulfate, carbon fibers, glass fibers, metal fibers, cellulose, siliceous sand, poppy stone, carbon black, titanium oxide, magnesium hydroxide, asbestos, zeolite, molybdenum, diatomaceous earth, sericite, white sand, calcium hydroxide, calcium bisulfite, sodium sulfate, bentonite, and graphite. Such recycled polystyrene-based resins (A) generally contain about 0.01 to 10 parts by mass of inorganic fillers per 100 parts by mass of the recycled polystyrene-based resin (A).

In the present embodiment, it is preferable that the weight average molecular weight (Mw) of the recycled polystyrene-based resin (A) before the osmium tetroxide treatment is 100,000 to 400,000, and more preferably 120,000 to 380,000. When the weight average molecular weight is 150,000 to 350,000, the resin that exhibits excellent practicality in terms of a balance between impact strength and fluidity is obtained.

The weight average molecular weight can be measured in terms of standard polystyrene using gel permeation chromatography.

In the present embodiment, when the recycled polystyrene-based resin (A) before the osmium tetroxide treatment contains rubbery polymer particles (a2), the rubbery polymer particles (a2) may contain a resin containing styrene monomer unit or a polystyrene-based polymer obtained from styrene-based monomers (polystyrene and/or styrene-unsaturated carboxylic acid-based polymer) inside the particles; and/or a resin containing styrene monomer unit or a polystyrene-based polymer that is grafted to the surface of the rubbery polymer particles (a2). More specifically, the rubbery polymer particles (a2) in the present embodiment may be particles containing the rubbery polymer (a). Therefore, the form of the rubbery polymer particles (a2) includes solid particles made of the rubbery polymer (a), hollow particles made of the rubbery polymer (a), encapsulated particles in which a phase containing a polystyrene-based polymer is encapsulated in the rubbery polymer (a) (including microphase-separated structures, core-shell structures, and salami-type structures), as well as surface-grafted particles in which the polystyrene-based polymer is grafted to the surface. Further, these forms may be used in combination.

It is sufficient that the rubbery polymer (a) in the present embodiment has a conjugated diene structure. Therefore, the rubbery polymer (a) is a conjugated diene-based polymer that contains conjugated diene monomer units, and examples thereof that can be used include rubber components such as polybutadiene, polyisoprene, natural rubber, polychloroprene, styrene-butadiene copolymer, and acrylonitrile-butadiene copolymer, for example.

The average particle size of the rubbery polymer particles (a2) contained in the recycled polystyrene-based resin (A) before the osmium tetroxide treatment in the present embodiment is preferably 0.1 to 4.0 $\mu$m and more preferably 0.3 to 3.8 $\mu$m, from the perspective of impact resistance.

Moreover, the average particle size of the rubbery polymer particles (a2) contained in the recycled polystyrene-based resin (A) before the osmium tetroxide treatment can be measured by the method for measuring the average particle size of the rubbery polymer particles (b2) described later.

As a preferred form of the rubbery polymer particles (a2), the form of the rubbery polymer particles (b2) described below can be applied.

<Integral Distribution Curve>

In the present embodiment, the dispersed matters in the dispersion of the regenerated styrene-based resin composition obtained by dissolving and dispersing the regenerated styrene-based resin composition in N,N-dimethylformamide preferably satisfy the following formula (1):
[Math. 2]

$$0 < (|d_{84\%} - d_{16\%}|) / 2 < 2 \qquad\qquad (1)$$

(where $d_{84\%}$ is the 84% cumulative diameter on the integral distribution curve of the particle size of the dispersed matters measured by laser diffraction, and $d_{16\%}$ is the 16% cumulative diameter on the integral distribution curve of the particle size of the dispersed matters measured by laser diffraction.)

As a result, a regenerated styrene-based resin composition that reduces the environmental impact and has excellent mechanical strength can be provided.

The dispersed matters are composed of the toluene-insoluble fraction (1) after the osmium tetroxide treatment derived from the recycled polystyrene-based resin (A) contained in the regenerated styrene-based resin composition (for example, the above-mentioned mixed substance) and all rubbery polymer particles in the regenerated styrene-based resin composition. In the integral distribution curve obtained by integrating the particle size distribution of the dispersed matters, the value obtained by dividing the absolute value of the difference between the 16% diameter ($d_{16\%}$), which is the particle size at which the cumulative value of the frequency (%) (hereinafter referred to as the cumulative value) reaches 16%, and the 84% diameter ($d_{84\%}$), which is the particle size at which the cumulative value of the frequency reaches 84% (hereinafter referred to as $d_{84\%}$ - $d_{16\%}$), by 2, is more than 0 and less than 2. The exact reason for this is unclear, but it is considered that the particle size of the toluene-insoluble fraction derived from the recycled polystyrene-based resin (A) after the osmium tetroxide treatment, which is included as the dispersed matters, tends to be relatively small, making them less likely to be the starting point for cracking.

Laser diffraction is used in particle size measurement devices, utilizing the fact that the angular distribution of the forward diffraction light of laser light by particles assumed to be spherical becomes a function of the particle size. More specifically, in the method, laser light, such as monochromatic light, is projected onto the flow path of a suspension in which particles assumed to be spherical are dispersed. The diffraction light of the particles passing through the laser light in sequence is converted into a plane wave by a lens system, and the light intensity distribution in the radial direction of the plane wave is supplied to a light detector through a rotating slit. The detection output of the light detector is displayed to calculate the particle size distribution of the particles.

Then, using laser diffraction, a particle size distribution on either a number basis or volume basis is plotted where the equivalent spherical diameter is on the horizontal axis and the frequency (%) on the vertical axis. In the examples, particle size distributions on the volume basis are employed.

Therefore, in this specification, "particle size distribution" refers to the particle size distribution of the dispersed matters (i.e., the toluene-insoluble fraction (1) after the osmium tetroxide treatment derived from the recycled polystyrene-based resin (A) and all rubbery polymer particles in the regenerated styrene-based resin composition) in a plot where the equivalent spherical diameter is on the horizontal axis and the volume fraction (%) is on the vertical axis.

In this specification, the "integral distribution curve" refers to the curve obtained by integrating the equivalent spherical diameter of the dispersed matters, in a plot where the equivalent spherical diameter is on the horizontal axis and the cumulative value of the frequency (%) is on the vertical axis. Further, the integral distribution curve is a function obtained by integrating the particle size distribution.

The volume fraction represents the percentage of the volume of the dispersed matters when the particles are considered as spheres in the particle size measurement.

In the regenerated styrene-based resin composition of the present embodiment, the value of one-half of the absolute value of the difference between the 16% diameter ($d_{16\%}$), which is the particle size at which the cumulative value of the frequency (%) (hereinafter referred to as the cumulative value) reaches 16%, and the 84% diameter ($d_{84\%}$), which is the particle size at which the cumulative value of the frequency reaches 84% (hereinafter referred to as $d_{84\%}$ - $d_{16\%}$) in the integral distribution curve (particle size distribution on the basis of number) obtained by integrating the particle size distribution of the dispersed matters is more than 0 and less than 2 $\mu$m, preferably 0.1 $\mu$m or more and 1.8 $\mu$m or less, more preferably 0.2 $\mu$m or more and 1.6 $\mu$m or less, and even more preferably 0.3 $\mu$m or more and 1.5 $\mu$m or less.

Additionally, the value of one-half of the absolute value of the difference between the 16% diameter ($d_{16\%}$), which is the particle size at which the cumulative value of the frequency (%) (hereinafter referred to as the cumulative value) reaches 16%, and the 84% diameter ($d_{84\%}$), which is the particle size at which the cumulative value of the frequency reaches 84% (hereinafter referred to as $d_{84\%}$ - $d_{16\%}$) in the integral distribution curve (particle size distribution on the basis of volume) obtained by integrating the particle size distribution of the dispersed matters is more than 0 and less than 2 $\mu$m, preferably 0.4 $\mu$m or more and 1.9 $\mu$m or less, more preferably 0.5 $\mu$m or more and 1.8 $\mu$m or less, and even more preferably 0.6 $\mu$m or more and 1.7 $\mu$m or less.

Examples of the means for controlling the half the difference of the absolute value of $d_{84\%}$ - $d_{16\%}$ to be more than 0 and less than 2 $\mu$m include means, such as mixing (blending) the recycled polystyrene-based resin (A) and the rubber-modified polystyrene-based resin (B) and passing the mixture through a screen mesh for sieving, crushing or pulverizing the recycled polystyrene-based resin (A) using a crusher, or using the recycled polystyrene-based resin (A) that has been crushed or pulverized using a crusher. Examples of the grinding machines include, for example, ball mills (such as rolling ball mills), roller mills, planetary mills, and stirred mills.

In the integral distribution curve (particle size distribution on the basis of number) of the dispersed matters of the present embodiment, the 84% diameter ($d_{84\%}$) (on the vertical axis) is preferably 0.5 $\mu$m or more and 6.0 $\mu$m or less, more preferably 0.6 $\mu$m or more and 5.5 $\mu$m or less, and even more preferably 0.7 $\mu$m or more and 5.0 $\mu$m or less.

In the integral distribution curve (particle size distribution on the basis of volume) of the dispersed matters of the present embodiment, the 84% diameter ($d_{84\%}$) (on the vertical axis) is preferably 1.0 $\mu$m or more and 8.0 $\mu$m or less, more preferably 1.2 $\mu$m or more and 7.5 $\mu$m or less, and even more preferably 1.4 $\mu$m or more and 7.0 $\mu$m or less.

In the integral distribution curve (particle size distribution on the basis of number) of the dispersed matters of the present embodiment, the 16% diameter ($d_{16\%}$) (on the vertical axis) is preferably 0.05 $\mu$m or more and 4.0 $\mu$m or less, more preferably 0.1 $\mu$m or more and 3.0 $\mu$m or less, and even more preferably 0.2 $\mu$m or more and 2.0 $\mu$m or less.

In the integral distribution curve (particle size distribution on the basis of volume) of the dispersed matters of the present embodiment, the 16% diameter ($d_{16\%}$) (on the vertical axis) is preferably 0.1 $\mu$m or more and 4.0 $\mu$m or less, more preferably 0.2 $\mu$m or more and 3.5 $\mu$m or less, and even more preferably 0.3 $\mu$m or more and 3.0 $\mu$m or less.

# EP 4 603 538 A1

<Polymer Matrix Portion (a1)>

When the recycled polystyrene-based resin (A) in the present embodiment contains rubbery polymer particles (a2), the recycled polystyrene-based resin (A) is composed of the toluene-insoluble fraction (1) after the osmium tetroxide treatment, the polymer matrix portion (a1), and the rubbery polymer particles (a2). On the other hand, when the recycled polystyrene-based resin (A) in the present embodiment does not contain rubbery polymer particles (a2), the recycled polystyrene-based resin (A) is composed of the toluene-insoluble fraction (1) after the osmium tetroxide treatment and the polymer matrix portion (a1).

The polymer matrix portion (a1) in the present embodiment may be a styrene-based copolymer resin that includes one or more monomer units selected from the group consisting of styrene-based homopolymer (i.e., polystyrene), styrene-based monomer units, and unsaturated carboxylic acid-based monomer units, or a mixture of styrene-based homopolymer and a styrene copolymer resin.

Examples of monomers forming the styrene-based monomer units include styrene, □-methylstyrene, □-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such as indene, for example.

Preferred unsaturated carboxylic acid-based monomers include (meth)acrylic acid monomers and (meth)acrylic acid ester monomers. Examples of such (meth)acrylic acid monomers include acrylic acid or methacrylic acid, for example. Examples of the (meth)acrylic acid ester monomer unit include, for example, methyl (meth)acrylate, ethyl (meth)acrylate, propyl (meth)acrylate, (n-butyl) (meth)acrylate, (t-butyl) (meth)acrylate, (isobutyl) (meth)acrylate, cyclohexyl (meth)acrylate, benzyl (meth)acrylate, (n-octyl) (meth)acrylate, (2-ethylhexyl) (meth)acrylate, decyl (meth)acrylate, and stearyl (meth)acrylate. These may be used either alone or in combination.

The composition of the polymer matrix portion (a1) in the present embodiment may vary depending on the recycled polystyrene-based resin (A) used, but generally, it is preferable that the styrene-based monomer units account for 40 to 100 mass%, the (meth)acrylic acid monomer units account for 0 to 25 mass%, and the (meth)acrylic acid ester monomer units account for 0 to 50 mass%, relative to the entire polymer matrix portion (a1).

Additionally, the recycled polystyrene-based resin (A) in the present embodiment contains the toluene-insoluble fraction (2) before the osmium tetroxide treatment. Furthermore, the content of the toluene-insoluble fraction (2) before the osmium tetroxide treatment in the recycled polystyrene-based resin (A) includes those of the above-mentioned mixed substances (such as other resins (other resins (e.g., olefin resins such as polyethylene-based resins or polypropylene-based resins), inorganic substances (e.g., metal powder or silica), pigments, deposits, or foreign matters), and rubbery polymer particles (a2) that are blended if necessary.

The content of the toluene-insoluble fraction (2) before the osmium tetroxide treatment varies depending on the recycled polystyrene-based resin (A) used, but, in general, is preferably more than 0 to 35 mass%, more preferably more than 0 to 30 mass%, even more preferably more than 0 to 25 mass%, and even more preferably more than 0 to 20 mass%, and even further preferably more than 0 to 17 mass%, relative to the entire recycled polystyrene-based resin (A). In another form, the content of the toluene-insoluble fraction (2) before the osmium tetroxide treatment, is preferably 21.3 mass% or more and 35 mass% or less, and more preferably 22 mass% or more and 32 mass% or less, relative to the entire recycled polystyrene-based resin (A).

Therefore, the content of the polymer matrix portion (a1) may be, in general, the value obtained by subtracting the amount of the toluene-insoluble fraction (2) before the osmium tetroxide treatment from the amount of the recycled polystyrene-based resin (A).

In the present embodiment, the weight average molecular weight (Mw) of the polymer matrix portion (a1) is preferably 100,000 to 400,000, and more preferably 120,000 to 380,000. When the weight average molecular weight is 100,000 to 350,000, the resin that exhibits excellent practicality in terms of a balance between impact strength and fluidity is obtained.

The weight average molecular weight can be measured in terms of standard polystyrene using gel permeation chromatography.

(Rubber-modified Polystyrene-based Resin (B))

The rubber-modified polystyrene-based resin (B) in the present embodiment contains rubbery polymer particles (b2) that form the domain phase and a polystyrene-based resin (b1) that forms the polymer matrix phase. More specifically, the rubber-modified polystyrene-based resin (B) is a material in which particles of a rubbery polymer (b) (hereinafter referred to as rubbery polymer particles (b2)) are dispersed in the polystyrene-based resin (b1) as the polymer matrix phase, and can be produced by polymerizing styrene-based monomers in the presence of the rubbery polymer (b). Examples of the polystyrene-based resin (b1) include polystyrene-based polymers such as polystyrene and/or polystyrene-unsaturated carboxylic acid copolymers.

Furthermore, the rubber-modified polystyrene-based resin (B) in the present embodiment is preferably a virgin material, that is, unused material.

Examples of the styrene-based monomer constituting the rubber-modified polystyrene-based resin (B) in the present embodiment include styrene, □-methylstyrene, □-methyl-p-methylstyrene, o-methylstyrene, m-methylstyrene, p-methylstyrene, vinyltoluene, ethylstyrene, isobutylstyrene, t-butylstyrene or bromostyrene, and styrene derivatives such indene. Styrene is particularly preferable. One or more of these styrene-based monomers may be used. In the present embodiment, polystyrene refers to a homopolymer obtained through polymerization of the styrene-based monomer, and generally available polystyrenes can be appropriately selected and used.

In the present embodiment, the polystyrene-based resin (b1) that forms the polymer matrix phase of the rubber-modified polystyrene-based resin (B) or the polystyrene-based resin (b1) contained in part of the rubbery polymer particles (b2) is a polymer that essentially contains styrene-based monomer units made of the styrene-based monomer. Additionally, the polymer may be a copolymer of the styrene-based monomer and an unsaturated carboxylic acid-based monomer. Therefore, examples of the monomer constituting the styrene-based resin (b1) that forms the polymer matrix phase of the rubber-modified polystyrene-based resin (B) or the polystyrene-based resin (b1) contained in a part of the rubbery polymer particles (b2) include unsaturated carboxylic acid-based monomers other than the styrene-based monomers. Preferred unsaturated carboxylic acid-based monomers include (meth)acrylic acid monomers and (meth) acrylic acid ester monomers. Examples of such (meth)acrylic acid monomers include acrylic acid or methacrylic acid. Examples of the (meth)acrylic acid ester monomer unit include, for example, methyl (meth)acrylate, ethyl (meth)acrylate, propyl (meth)acrylate, (n-butyl) (meth)acrylate, (t-butyl) (meth)acrylate, (isobutyl) (meth)acrylate, cyclohexyl (meth) acrylate, benzyl (meth)acrylate, (n-octyl) (meth)acrylate, (2-ethylhexyl) (meth)acrylate, decyl (meth)acrylate, and stearyl (meth)acrylate. These may be used either alone or in combination.

The polystyrene-based resin (b1) that forms the polymer matrix phase in the rubber-modified polystyrene-based resin (B) is preferably one or two or more selected from the group consisting of polystyrene and styrene-unsaturated carboxylic acid copolymers.

In the present embodiment, the content of styrene-based monomer units relative to the entire rubber-modified polystyrene-based resin (B) is preferably 37 to 98 mass%, more preferably 49 to 96 mass%.

In the present embodiment, the content of unsaturated carboxylic acid-based monomer units relative to the entire rubber-modified polystyrene-based resin (B) is preferably 0 to 63 mass%, and more preferably 0 to 51 mass%.

In the present embodiment, the content of (meth)acrylic acid monomer units relative to the entire rubber-modified polystyrene-based resin (B) is preferably 0 to 3 mass%, more preferably 0 to 1 mass%.

In the present embodiment, the content of (meth)acrylic acid ester monomer units relative to the entire rubber-modified polystyrene-based resin (B) is preferably 0 to 60 mass%, more preferably 0 to 50 mass%.

The rubbery polymer particles (b2) contained in the rubber-modified polystyrene-based resin (B) in the present embodiment may contain, for example, a resin containing styrene monomer unit or a polystyrene-based polymer obtained from the above-mentioned styrene-based monomers inside the rubbery polymer particles (b2), and/or may be a resin containing styrene monomer unit or a polystyrene-based polymer that are grafted to the surface of the rubbery polymer particles (b2). More specifically, it is sufficient that the rubbery polymer particles (b2) in the present embodiment are particles containing a rubbery polymer (b). Therefore, the form of the rubbery polymer particles (b2) can include solid particles made from the rubbery polymer (b), hollow particles made from the rubbery polymer (b), encapsulated particles that contain a phase of the polymer forming the polystyrene-based resin (b1) within the rubbery polymer (b) (including a microphase separation structure, a core-shell structure, and a salami-type structure), and surface grafted particles where a polymer forming the polystyrene-based resin (b1) is grafted to the surface. Further, these forms may be used in combination.

It should be noted that "styrene-based monomer unit" in the present specification refers to a repeating unit that constitutes a polymer resulting from the polymerization of the styrene-based monomer, and is formed by the polymerization or cross-linking reaction of the styrene-based, so that the carbon-carbon double bond in the styrene-based monomer is changed into a single bond (-C-C-). The same definition applies to other monomer units described in this specification.

It is sufficient that the rubbery polymer (b) in the present embodiment may have a conjugated diene structure. Therefore, the rubbery polymer (b) is a conjugated diene-based polymer containing conjugated diene monomer units, and rubber components such as polybutadiene, polyisoprene, natural rubber, polychloroprene, styrene-butadiene copolymers, and acrylonitrile-butadiene copolymers may be used, for example. Additionally, the rubber component may include forms that encapsulate polystyrene-based resins (b1), such as polystyrene and/or polystyrene-unsaturated carboxylic acid copolymers. Among these, the rubbery polymer (b) is preferably polybutadiene or styrene-butadiene copolymer. Both high cis polybutadiene having a high cis content and low cis polybutadiene having a low cis content can be used as the polybutadiene. In addition, as the structure of the styrene-butadiene copolymer, both a random structure and a block structure can be used. One of these rubbery polymer (b) may be used, or two or more of these rubbery polymer (b) may be used. A saturated rubber obtained by hydrogenating a butadiene-based rubber may be used.

Since the rubbery polymer (b) constituting the rubbery polymer particles (b2) has a conjugated diene structure, the rubbery polymer particles (b2) can be dissolved in organic solvents such as toluene through the osmium tetroxide treatment mentioned above.

Examples of the rubber-modified polystyrene-based resin (B) in the present embodiment include HIPS (high impact polystyrene), ABS resin (acrylonitrile-butadiene-styrene copolymer), AAS resin (acrylonitrile-acrylic rubber-styrene copolymer), and AES resin (acrylonitrile-ethylene propylene rubber-styrene copolymer), with HIPS (high impact polystyrene) being particularly preferred.

In the case where the rubber-modified polystyrene-based resin (B) is an HIPS-based resin, particularly preferred among these rubbery polymer (b) is a high cis polybutadiene including 90 mol% or more of cis-1,4 bonds. In the high cis polybutadiene, the vinyl 1,2 bond is included preferably in an amount of 6 mol% or less, particularly preferably 3 mol% or less.

Note that the content ratio of the constitutional units of the high cis polybutadiene having a cis-1,4 structure, trans-1,4 structure, or vinyl-1,2 structure as isomers of the constitutional units of the high cis polybutadiene can be calculated by carrying out a measurement using an infrared spectrophotometer and data processing by the Morello method.

In addition, the high cis polybutadiene can be easily obtained through polymerization of 1,3-butadiene using a well-known production method, for example, by using a catalyst containing an organoaluminum compound and a cobalt or nickel compound.

In the present embodiment, when a conjugated diene-based polymer containing (meth)acrylonitrile monomer units such as acrylonitrile monomer units is used as the material for the rubbery polymer particles (b2) or the rubbery polymer (b), the content of (meth)acrylonitrile monomer units is preferably 10 mass% or less, more preferably 5 mass% or less, even more preferably 3 mass% or less, and particularly preferably 0.7 mass% or less, relative to the entire regenerated styrene-based resin composition (100 mass%).

The content of the rubbery polymer (b) contained in the rubber-modified polystyrene-based resin (B) in the present embodiment is preferably 2 to 15 mass%, more preferably 2.2 to 10 mass%, and even more preferably 2.4 to 8 mass%, relative to the entire amount of the rubber-modified polystyrene-based resin (B) (100 mass%). From another perspective, 2.6 to 6 mass% is preferred, and 3 to 5 mass% is more preferred. If the content of the rubbery polymer (b) is less than 2 mass%, the impact resistance may be decreased. Furthermore, if the content of the rubbery polymer (b) exceeds 15 mass%, the gloss may be decreased and bending creep characteristics may be decreased.

In the present disclosure, the content of the rubbery polymer (b) in the rubber-modified polystyrene-based resin (B) (i.e., the so-called polybutadiene content) is calculated using thermal decomposition gas chromatography.

The content of the rubbery polymer particles (b2) contained in the rubber-modified polystyrene-based resin (B) in the present embodiment (the toluene-insoluble fraction in the rubber-modified polystyrene-based resin (B)) is preferably 8 to 35 mass% relative to the entire amount of the rubber-modified polystyrene-based resin (B) (100 mass%).

In the present disclosure, the content of the rubbery polymer particles (b2) or the all rubbery polymer particles in the rubber-modified polystyrene-based resin (B) or the regenerated styrene-based resin composition corresponds to the toluene-insoluble fraction of the resin (B) or composition before osmium tetroxide treatment. Specifically, it is calculated using the following method.

To measure the content (mass%) of the rubbery polymer particles (b2) in the composition, into a sedimentation tube, 1 g of the resin or composition to be measured is precisely weighed (this mass is designated as W), and 20 mL of toluene is added. After shaking for 2 hours at 23 °C, the mixture is centrifuged for 60 minutes at 20,000 rpm (centrifugal acceleration: 4510 G) at 5 °C or lower using a centrifuge (manufactured by Sakuma Seisakusho, SS-2050A). Then, the supernatant is decanted by slowly tilting the sedimentation tube by approximately 45°, and the resulting insoluble fraction is further vacuum dried for 1 hour under conditions of 160 □C and 3 kPa or lower. After cooling to room temperature in a desiccator, the mass of the toluene-insoluble fraction is precisely weighed (this mass is designated as G). The content of the rubbery polymer particles (b2) (mass%) is calculated using the following formula.

$$\text{Content of rubbery polymer particles (b2)} = (G \,/\, W) \times 100$$

The average particle size of the rubbery polymer particles (b2) contained in the rubber-modified polystyrene-based resin (B) in the present embodiment is preferably 0.5 to 3.0 $\mu$m and more preferably 0.8 to 2.8 $\mu$m from the perspective of impact resistance. From another perspective, 0.55 to 3.2 $\mu$m is preferred, and 0.65 to 2.8 $\mu$m is more preferred. If the average particle size of the rubbery polymer particles (b2) is smaller than 0.5 $\mu$m or larger than 3.0 $\mu$m, the impact strength or chemical resistance may be insufficient or the gloss may be decreased.

In the present disclosure, the average particle size of the rubbery polymer particles (b2) contained in the rubber-modified polystyrene-based resin (B) can be measured using the following method.

A 75 nm ultrathin section is prepared from the rubber-modified polystyrene-based resin (B) stained with osmium tetroxide, and a photograph is taken under an electron microscope at a magnification of 10,000 times. In the photograph, the particles stained black are the rubbery polymer particles (b2). The area-average particle size is calculated according to the following formula (N1) based on the photograph, and is used as the average particle size of the rubbery polymer particles (b2).
[Math. 3]

$$\text{Average particle size} = \Sigma niDri^3 / \Sigma niDri^2 \qquad (N1)$$

(In the above mathematical formula (N1), ni is the number of rubbery polymer (b2) having a particle diameter Dri, wherein Dri is the particle size calculated as the equivalent circle diameter from the area of the particles in the image.)

This measurement is conducted by scanning the photograph at a resolution of 200 dpi and analyzing it using the particle analysis software on the image analysis device IP-1000 (manufactured by Asahi Kasei Corporation).

The reduced viscosity of the rubber-modified polystyrene-based resin (B), which is an indicator of the molecular weight of the rubber-modified polystyrene-based resin (B), is preferably in a range of 0.50 to 0.85 dL/g, and more preferably in a range of 0.55 to 0.80 dL/g. If the reduced viscosity is less than 0.50 dL/g, the impact strength may be lowered. If reduced viscosity is more than 0.85 dL/g, the fluidity may be reduced, which results in a reduction in the formability.

Note that, in the present disclosure, the reduced viscosity of the rubber-modified polystyrene-based resin (B) is a value measured under a condition of 30 °C and a concentration of 0.5 g/dL in a toluene solution.

In the present embodiment, the weight average molecular weight (Mw) of the polystyrene-based resin (b1) in the rubber-modified polystyrene-based resin (B) is preferably 100,000 to 350,000, more preferably 127,000 to 250,000. In another embodiment, the weight average molecular weight (Mw) of the polystyrene-based resin (b1) may be 110,000 to 235,000, 120,000 to 224,000, or 123,000 to 193,000. When the weight average molecular weight is in the range of 100,000 to 350,000, the resin that exhibits excellent practicality in terms of a balance between impact strength and fluidity is obtained.

The weight average molecular weight can be measured in terms of standard polystyrene using gel permeation chromatography.

The method of producing the rubber-modified polystyrene-based resin (B) in the present embodiment is not particularly restricted, but it can be produced by bulk polymerization (or solution polymerization) of a styrene-based monomer and an optionally added unsaturated carboxylic acid-based monomer (and solvent) in the presence of a rubbery polymer (b), by bulk-suspension polymerization that transitions to suspension polymerization during the reaction, or by emulsion graft polymerization of a styrene-based monomer and an optionally added unsaturated carboxylic acid-based monomer in the presence of a rubbery polymer (b) latex. In the bulk polymerization, a mixed solution in which a rubbery polymer (b), a styrene-based monomer, an optionally added unsaturated carboxylic acid-based monomer, and an optional organic solvent, an organic peroxide, and/or a chain transfer agent are added is continuously fed to a polymerization apparatus in which a complete mixing type reactor or a tank type reactor and a plurality of tank type reactors are connected in series.

In the present embodiment, the melt flow rate of the rubber-modified polystyrene-based resin (B) at 200 °C is preferably 0.3 to 10.0 g/10 min, more preferably 0.5 to 8.0 g/10 min, and even more preferably 0.7 to 7.0 g/10 min. When the above melt flow rate is in the range of 0.3 to 10.0 g/10 min, good mixing with the recycled polystyrene-based resin (A) is achieved and good mechanical strength is also achieved. In the present disclosure, the melt mass rate is a value measured at a temperature of 200 °C under a load of 49 N in accordance with ISO 1133.

The essential components of the regenerated styrene-based resin composition of the present embodiment have been described above. Next, the styrene-based resin (C) and optional additives, which are optional components of the regenerated styrene-based resin composition of the present embodiment, will be described.

(Styrene-based Resin (C))

The regenerated styrene-based resin composition of the present embodiment may further contain a styrene-based resin (C) in addition to the recycled polystyrene-based resin (A) and the rubber-modified polystyrene-based resin (B).

The styrene-based resin (C) in the present embodiment essentially contains styrene-based monomer units and may also contain monomer units derived from unsaturated carboxylic acid monomers that are copolymerizable with styrene-based monomers, if necessary.

Examples of the styrene-based monomers include those similar to the styrene-based monomers used in the rubber-modified polystyrene-based resin (B), and thus are omitted here.

Examples of the unsaturated carboxylic acid monomers include those similar to the unsaturated carboxylic acid monomer used in the rubber-modified polystyrene-based resin (B), and thus are omitted here.

The rubber-modified polystyrene-based resin (B) and the styrene-based resin (C) in the present embodiment are different from the rubber-modified polystyrene-based resin (B) in that the styrene-based resin (C) does not contain rubbery polymer particles (b2). In other words, the styrene-based resin (C) (before an osmium tetroxide treatment) substantially does not contain toluene-insoluble fraction. Further, the polymer composition of the styrene-based resin (C) may be the same as or may be different from that of the polystyrene-based resin (b1). In the case where the styrene-based resin (C) has the same polymer composition as the polystyrene-based resin (b1), it will be difficult to distinguish them in the regenerated styrene-based resin composition. However, by controlling the composition ratio of the styrene-based monomer units and the unsaturated carboxylic acid monomer units contained if necessary, as the overall polymer composition (components excluding the rubber component) in the regenerated styrene-based resin composition, it is possible to achieve effects such as reducing environmental impact and improving mechanical strength.

[Optional Additives]

In the present embodiment, at any stage before and after the recovery step in the production of the recycled polystyrene-based resin (A), the rubber-modified polystyrene-based resin (B), or optional components, or at the stage of extrusion processing or molding processing of the regenerated styrene-based resin composition, various additives may be added, if necessary, within a range not impairing the purpose of the present disclosure. Examples of additives include plasticizers such as liquid paraffin, ultraviolet absorbers, light stabilizers, antioxidants such as hindered phenol-based antioxidants, phosphorus-based antioxidants, or sulfur-based antioxidants, lubricants, antistatic agents, flame retardants, various dyes and pigments, inorganic crystal nucleating agents (metal oxides such as titanium oxide or tin oxide), organic crystal nucleating agents, fluorescent whitening agents, light-diffusing agents, and selective wavelength absorbers, for example.

The regenerated styrene-based resin composition according to the present embodiment preferably contains one or more selected from the group consisting of antioxidants, pigments, flame retardants, additives, mineral oils, plant oils, and lubricants.

The light stabilizer for the present embodiment does not have ultraviolet absorption ability per se but preferably functions to capture and neutralize photoradicals generated when the regenerated styrene-based resin composition absorbs ultraviolet light, thereby preventing the degradation and discoloration of the composition caused by radicals. The light stabilizer can be used alone or in combination with two or more types, and by using the light stabilizer in conjunction with the ultraviolet absorber and/or antioxidant described later, an even higher light resistance effect can be exhibited.

Examples of the light stabilizer for the present embodiment include bis(1,2,2,6,6-pentamethyl-4-piperidyl) sebacate, bis(1-undecyloxy-2,2,6,6-tetramethylpiperidin-4-yl) carbonate, tetrakis(2,2,6,6-tetramethyl-4-piperidyl) butane-1,2,3,4-tetracarboxylate, bis(1,2,2,6,6-pentamethyl-4-piperidyl) sebacate, N,N'-bis(2,2,6,6-tetramethylpiperidin-4-yl)hexane-1,6-diamine, and butyl(3,5-di-t-butyl-4-hydroxybenzyl) malonate bis(1,2,2,6,6-pentamethyl-4-piperidyl). Specific product manes include ADK STAB LA-52, ADK STAB LA-57, ADK STAB LA-63P, ADK STAB LA-68, ADK STAB LA-72, ADK STAB LA-77Y, ADK STAB LA-77G, and ADK STAB LA-81 (manufactured by ADEKA Corporation), JF-90G and JF-95 (manufactured by Johoku Chemical Co., Ltd.), and Chimasorb 2020FDL, Chimasorb 944FDL, and Tinuvin 622SF.

The ultraviolet absorber for the present embodiment functions to absorb ultraviolet rays that would otherwise be absorbed by the regenerated styrene-based resin composition, converting them into heat or chemical energy to suppress the generation of photoradicals generated when ultraviolet light is absorbed by the regenerated styrene-based resin composition and thus prevent degradation and discoloration of the resin.

Preferred ultraviolet absorbers for the present embodiment include, for example, benzotriazole-based compounds, triazine-based compounds, benzophenone-based compounds, and benzoate-based compounds.

Preferred antioxidants for the present embodiment include hindered phenol-based antioxidants such as octadecyl-3-(3,5-ditert-butyl-4-hydroxyphenyl)propionate, 4,6-bis(octylthiomethyl)-o-cresol (the product name is, for example, Irganox 1076 manufactured by BASF Japan), and phosphorus-based process heat stabilizers such as tris(2,4-di-tert-butylphenyl)phosphite (the product name is, for example, Irgafos 168 manufactured by BASF Japan). These stabilizers may be used alone or in combination of two or more. There is no particular restriction on the timing of addition; it can be added either during the polymerization step or the devolatilization step. The stabilizer can also be mixed with the product using mechanical equipment such as extruders or mixers.

The content of light stabilizers, ultraviolet absorbers, and antioxidants for the present embodiment is preferably 0.001 to 2.0 mass% relative to the entire amount of the regenerated styrene-based resin composition. The upper limit is preferably 1.8 mass%, 1.6 mass%, 1.4 mass%, 1.2 mass%, 1.0 mass%, 0.8 mass%, or 0.7 mass% in the order of preference, and the lower limit is preferably 0.005 mass%, 0.010 mass%, 0.021 mass%, 0.051 mass%, 0.061 mass%, 0.071 mass%, 0.079 mass%, 0.089 mass%, 0.12 mass%, and 0.17 mass% in the order of preference. These upper limit and lower limit of the amount can be selected in any combination.

The regenerated styrene-based resin composition according to the present invention may further contain a metal or metal oxide as an inorganic crystalline nucleating agent. In the regenerated styrene-based resin composition of the present disclosure, the content of metal oxides (e.g., titanium dioxide) is preferably in the range of 0.07 mass% to 5.5 mass%, more preferably in the range of 0.65 mass% to 3.8 mass%, and most preferably in the range of 1.2 mass% to 3 mass% relative to the total weight of the regenerated styrene-based resin composition. Alternatively, as another aspect, the content is preferably 1.1 mass% or more and 2.8 mass% or less. As yet another aspect, the content is more preferably 0.2 mass% or more and 0.9 mass% or less.

The total amount of the various additives in the regenerated styrene-based resin composition is preferably 10.0 mass% or less, more preferably 5.5 mass% or less, even more preferably 2.9 mass% or less, still even more preferably 1.5 mass% or less, and particularly preferably 0.9 mass% or less, relative to 100 mass% of the regenerated styrene-based resin composition.

[Physical Properties of Regenerated styrene-based resin composition]

Hereinafter, preferred physical properties of the regenerated styrene-based resin composition in the present embodiment will be described.

<Vicat Softening Temperature>

In the present embodiment, the Vicat softening temperature of the recycle styrene-based resin composition is preferably 88 °C or higher, more preferably 91 °C or higher, and even more preferably 93 °C or higher. By ensuring that the Vicat softening temperature is 88 °C or higher, molded articles with excellent heat resistance can be obtained. The Vicat softening temperature in the present specification is measured under the conditions of a load of 5 kg and a heating rate of 50 °C /h in accordance with ISO 306.

<Charpy Impact Strength>

The Charpy impact strength of the regenerated styrene-based resin composition of the present embodiment is preferably 5 kJ/m$^2$ or more, more preferably in the range of 7 to 20 kJ/m$^2$. If the impact strength is less than 5 kJ/m$^2$, there is a risk of breakage during use. In the present disclosure, the Charpy impact strength is a value measured in accordance with ISO 179.

The melt mass flow rate of the regenerated styrene-based resin composition of the present embodiment is preferably 1.5 g/10 min or more, and more preferably 2 to 18 g/10 min. When the melt mass flow rate is 1.5 g/10 min or more, the moldability during extrusion molding or vacuum molding becomes satisfactory. The above-described melt mass flow rate can be achieved by adjusting the melt mass flow rate of each component (A) to (C) and the mixing ratio of these resins. In the present disclosure, melt mass rate is a value measured at a temperature of 200 °C under 5.00 kg in accordance with ISO 1133.

In the present embodiment, the weight average molecular weight (Mw) of the regenerated styrene-based resin composition before the osmium tetroxide treatment is preferably the same as that of the above-mentioned polymer component, and is preferably 100,000 to 350,000, more preferably 100,000 to 300,000, even more preferably 110,000 to 280,000, still even more preferably 115,000 to 250,000, and particularly preferably 120,000 to 230,000. When the weight average molecular weight is in the range of 100,000 to 350,000, the resin that exhibits excellent practicality in terms of a balance between impact strength and fluidity is obtained. The weight average molecular weight can be measured in terms of standard polystyrene using gel permeation chromatography (GPC).

[Method of Producing Regenerated styrene-based resin composition]

In the present embodiment, the method of producing the regenerated styrene-based resin composition includes preparing the recycled polystyrene-based resin (A), the rubber-modified polystyrene-based resin (B), and optional components, if necessary. The recycled polystyrene-based resin (A), the rubber-modified polystyrene-based resin (B), and the optional components, if necessary, are blended, molten, kneaded, and granulated, for which methods are not particularly limited, and methods commonly used in the production of styrene resins can be applied.

For example, the above-described components blended (mixed) using a drum tumbler, Henschel mixer, etc., are melt-kneaded using a Banbury mixer, single-screw extruder, twin-screw extruder, kneader, etc., and then subjected to sieving through a screen mesh to obtain the regenerated styrene-based resin composition by granulating with a rotary cutter, fan cutter, etc. The resin temperature of the melt-kneading is preferably 180 to 240 °C. In order to achieve the target resin temperature, the cylinder temperature of the extruder or the like is preferably set to a temperature that is lower than the resin temperature by 10 to 20 °C. A resin temperature less than 180 □C is not preferable because sufficient mixing cannot be achieved. On the other hand, a resin temperature greater than 240 °C is not preferable because thermal decomposition of the resin occurs.

(Preferred Aspects of Method of Producing Regenerated styrene-based resin composition)

A preferred method of producing the regenerated styrene-based resin composition of the present embodiment preferably includes a step (I) of preparing a recycled polystyrene-based resin (A) that contains a toluene-insoluble fraction (1) after an osmium tetroxide treatment, and a rubber-modified polystyrene-based resin (B) that contains rubbery polymer particles (b2) forming the domain phase and a polystyrene-based resin (b1) forming the polymer matrix phase; and a step (II) of melt-kneading the recycled polystyrene-based resin (A) and the rubber-modified polystyrene-based resin (B). This makes it possible to easily produce a regenerated styrene-based resin composition that reduces environmental impact, suppresses a decrease in mechanical strength, and exhibits excellent external appearance.

Hereinafter, steps (I) and (II) will be described in detail.

<Step (I)>

The step (I) is the preparation step for preparing the raw materials for the regenerated styrene-based resin composition of the present disclosure, namely, the recycled polystyrene-based resin (A) and the rubber-modified polystyrene-based resin (B).

Therefore, as part of this preparation step, it is preferable to have a step (I-A) of preparing the recycled polystyrene-based resin (A) and a step (I-B) of preparing the rubber-modified polystyrene-based resin (B). In this way, the compounds contained in the recycled polystyrene-based resin (A) and/or the rubber-modified polystyrene-based resin (B), properties, etc. will be utilized in the later step (II).

In addition, when a styrene-based resin (C) that does not contain rubbery polymer particles is used as a raw material for the regenerated styrene-based resin composition, the preparation step may further include a step (I-C) of preparing the styrene-based resin (C) that does not contain rubbery polymer particles.

<<Step (I-A)>>

The recycled polystyrene-based resin (A) in the present embodiment contains the toluene-insoluble fraction (1) after the osmium tetroxide treatment and the polymer matrix portion (a1) of the recycled polystyrene-based resin (A), as mentioned above. Furthermore, the recycled polystyrene-based resin (A) may also contain rubbery polymer particles (a2).

Therefore, as an aspect of the recycled polystyrene-based resin (A), the following aspects (i) and (ii) can be mentioned:

(i) an aspect in which the recycled polystyrene-based resin (A) contains the polymer matrix portion (a1) and the toluene-insoluble fraction (1) after the osmium tetroxide treatment, and the polymer matrix portion (a1) and the toluene-insoluble fraction (1) after the osmium tetroxide treatment (for example, the polystyrene containing the toluene-insoluble fraction (1) after the osmium tetroxide treatment, the styrene-based copolymer resin containing the toluene-insoluble fraction (1) after the osmium tetroxide treatment) account for 99 mass% or more of the total amount of the recycled polystyrene-based resin (A); or

(ii) an aspect in which the recycled polystyrene-based resin (A) contains the polymer matrix portion (a1), rubbery polymer particles (a2), and the toluene-insoluble fraction (1) after the osmium tetroxide treatment, and the polymer matrix portion (a1), rubbery polymer particles (a2), and the toluene-insoluble fraction (1) after the osmium tetroxide treatment (for example, the rubber-modified polystyrene-based resin containing the toluene-insoluble fraction (1) after the osmium tetroxide treatment) account for 99 mass% or more of the total amount of the recycled polystyrene-based resin (A).

When the recycled polystyrene-based resin (A) is in the aspect of (i), the step (I-A) is preferably a step (D1) of specifying the content of the toluene-insoluble fraction (1) after the osmium tetroxide treatment contained in the recycled polystyrene-based resin (A) and the weight average molecular weight of the polymer matrix portion (a1).

On the other hand, when the recycled polystyrene-based resin (A) is in the aspect of (ii), the step (I-A) is preferably a step (D2) of specifying the content of the rubbery polymer particles (a2) and the content of the toluene-insoluble fraction (1) after the osmium tetroxide treatment, contained in the recycled polystyrene-based resin (A), and the weight average molecular weight of the polymer matrix portion (a1).

This results in a regenerated styrene-based resin composition that reduces the environmental impact, further suppresses the decline in mechanical strength, and exhibits excellent external appearance and an excellent heat creep resistance characteristic.

In this case, it is preferable that the content of the rubbery polymer particles (a2) and the content of the toluene-insoluble fraction (1) after the osmium tetroxide treatment, contained in the recycled polystyrene-based resin (A), and the weight average molecular weight of the polymer matrix portion (a1) are within the above-described ranges.

<<Step (I-B)>>

The step (I-B) of preparing the rubber-modified polystyrene-based resin (B) in the present embodiment preferably includes a step (E1) of selecting the content of the rubbery polymer particles (b2) and the weight average molecular weight of the polystyrene-based resin (b1), contained in the rubber-modified polystyrene-based resin (B).

This results in a regenerated styrene-based resin composition that reduces the environmental impact, further suppresses the decline in mechanical strength, and exhibits excellent external appearance and an excellent heat creep resistance characteristic.

In this case, it is preferable that the content of the rubbery polymer particles (b2) and the weight average molecular weight of the polystyrene-based resin (b1), contained in the rubber-modified polystyrene-based resin (B), are within the above-described ranges.

<<Step (I-C)>>

The step (I-C) of preparing the styrene-based resin (C) that does not contain rubbery polymer particles of the present embodiment preferably includes a step (E2) of selecting the weight average molecular weight of the styrene-based resin (C) that does not contain rubbery polymer particles.

This results in a regenerated styrene-based resin composition that reduces the environmental impact, further suppresses the decline in mechanical strength, and exhibits excellent external appearance and an excellent heat creep resistance characteristic. In this case, it is preferable that the weight average molecular weight of the styrene-based resin (C) is within the above-described range.

A preferred step (I) of the present embodiment includes: a step (D2) of specifying the content of the rubbery polymer particles (a2) and the content of the toluene-insoluble fraction (1) after the osmium tetroxide treatment, contained in the recycled polystyrene-based resin (A), and the weight average molecular weight of the polymer matrix portion (a1); a step (E1) of selecting the content of the rubbery polymer particles (b2) and the weight average molecular weight of the polystyrene-based resin (b1), contained in the rubber-modified polystyrene-based resin (B); and a step (E2) of selecting the weight average molecular weight of the styrene-based resin (C) that does not contain rubbery polymer particles.

This results in a regenerated styrene-based resin composition that reduces the environmental impact, further suppresses the decline in mechanical strength, and exhibits excellent external appearance and an excellent heat creep resistance characteristic.

Additionally, it is preferable that the step (I) includes a step (III) of removing particles equal to or larger than a predetermined size (for example, particles with a maximum average particle size of 200 μm or more).

<Step (II)>

The step (II) is a step of melt-kneading the recycled polystyrene-based resin (A) and the rubber-modified polystyrene-based resin (B) prepared in the step (I), using the recycled polystyrene-based resin (A) and the rubber-modified polystyrene-based resin (B).

The conditions for the melt-kneading are preferably such that the components are blended (mixed) using a drum tumbler, a Henschel mixer, etc., and then melt-kneaded using a Banbury mixer, a single-screw extruder, a twin-screw extruder, a kneader, etc., for example. Furthermore, the resin temperature during the melt-kneading is preferably 180 to 240 °C.

Here, "melting" refers to a state in which a part of the recycled polystyrene-based resin (A) or the rubber-modified polystyrene-based resin (B) is molten, and does not imply that all components in the system are molten.

The step (II) of the present embodiment preferably includes a step of determining the blending amounts of the recycled polystyrene-based resin (A), the rubber-modified polystyrene-based resin (B), and the styrene-based resin (C) that does not contain rubbery polymer particles, which may be blended as needed.

Specifically, it is preferable to determine the blending amounts so that the resulting regenerated styrene-based resin composition satisfies the following (v) to (z).

(v) The amount of the polymer components, including the polymer matrix portion (a1) of the recycled polystyrene-based resin (A), the polystyrene-based resin (b1) of the rubber-modified polystyrene-based resin (B), and the styrene-based resin (C) that does not contain rubbery polymer particles is controlled to be less than 64 to 90 mass% relative to the total amount of the obtained regenerated styrene-based resin composition.

(x) The content of rubber components, including the rubbery polymer particles (a2) and rubbery polymer particles (b2), is controlled to be less than 9 to 30 mass%, preferably less than 10 to 28 mass%, relative to the entire amount of the resulting regenerated styrene-based resin composition.

(y) The content of the toluene-insoluble fraction (1) after the osmium tetroxide treatment is controlled to be in the range of 0.1 to 6 mass%, preferably in the range of 1 to 6 mass%, relative to the entire amount of the resulting regenerated styrene-based resin composition.

(z) The weight average molecular weight (Mw) of the entire polymer component is controlled to be in the range of 100,000 to 350,000.

This results in a regenerated styrene-based resin composition that reduces the environmental impact, further suppresses the decline in mechanical strength, and exhibits excellent external appearance and an excellent heat creep resistance characteristic.

The step (II) of the present embodiment preferably includes a step (G) of adjusting the melt-kneading conditions so that the particle size distribution ($\mu$m) of the DMF-insoluble matters in the regenerated styrene-based resin composition (i.e., the dispersed matters in the composition dispersion obtained when the regenerated styrene-based resin composition is dissolved and dispersed in N,N-dimethylformamide) satisfy the following formula:

$$0.00 < (|d_{84\%} - d_{16\%}|) / 2 < 2.00$$

(where $d_{84\%}$ represents the 84% cumulative diameter on an integral distribution curve of a particle size, and $d_{16\%}$ represents the 16% cumulative diameter on the integral distribution curve of the particle size.)

This results in a regenerated styrene-based resin composition that reduces the environmental impact, further suppresses the decline in mechanical strength, and exhibits excellent external appearance and an excellent heat creep resistance characteristic.

Additionally, it is preferable that the step (II) includes a step (III) of removing particles equal to or larger than a predetermined size.

<Step (III)>

The above step (III) is a step of removing mixed substances contained in the recycled polystyrene-based resin (A), and is preferably carried during the above step (I) or the above step (II), or after the above step (I) or the above step (II).

This results in a regenerated styrene-based resin composition that reduces the environmental impact, further suppresses the decline in mechanical strength, and exhibits excellent external appearance and an excellent heat creep resistance characteristic.

For example, the above step (III) is a step of separating particles smaller than a predetermined size after blending the recycled polystyrene-based resin (A), the rubber-modified polystyrene-based resin (B), and the styrene-based resin (C) that does not contain rubbery polymer particles, preferably after blending the raw materials, and while the raw materials are molten. In other words, it may be a step of removing the toluene-insoluble fraction (1) after the osmium tetroxide treatment equal to or larger than a predetermined size.

Similarly, for example, the step of separating particles smaller than a predetermined size may be performed after the above step (D1) or the above step (D2) and before the above step (II).

Specifically, as the step (III), a sieving step using one or more selected from a group consisting of filters and screen meshes can be mentioned. For example, it may be a step where the molten raw materials is passed through a filter and/or screen mesh.

This allows for the reduction of mixed substances equal to or larger than a predetermined size contained in the recycled polystyrene-based resin (A). Additionally, the melting of the raw materials can be carried out, for example, by feeding them into an extruder. The passage through the filter and screen mesh can be carried out by providing the polymer filter and/or screen mesh near the exit or entrance of the extruder.

The above filter is used to filter polymer components, such as the molten raw materials, and specific examples thereof include leaf disk filters, candle filters, or pack filters. The lower limit of the average pore size of the filter is preferably 10 $\mu$m or more, more preferably 30 $\mu$m or more, and the upper limit of the average pore size of the filter is preferably 200 $\mu$m or less, more preferably 180 $\mu$m or less.

The above screen mesh may be copper mesh, SUS (stainless steel) mesh, and the like. The lower limit of the mesh opening size of the screen mesh is preferably 94 $\mu$m or more, more preferably 112 $\mu$m or more, even more preferably 134 $\mu$m or more, and still even more preferably 140 $\mu$m or more. The mesh opening size of the screen mesh is preferably 198 $\mu$m or less, more preferably 164 $\mu$m or less, even more preferably 132 $\mu$m or less, and still even more preferably 109 $\mu$m or less.

The upper and lower limit values above can be combined arbitrarily. For example, the screen mesh may be 80 mesh (about 198 $\mu$m to 140 $\mu$m), 100 mesh (about 164 $\mu$m to 134 $\mu$m), 120 mesh (132 $\mu$m to 112 $\mu$m), or 150 mesh (109 $\mu$m to 94 $\mu$m).

By setting the lower limit of the average pore size or screen mesh opening of the above filter to the values mentioned above, the productivity tends to be improved because excessive resin pressure is prevented. Similarly, by setting the average pore size or screen mesh opening of the above filter to the above values, finer mixed substances tend to be removed.

In the passage through the filter and/or screen mesh in the present embodiment, the passage of only one of them or both of may be carried out. Furthermore, only the passage of the filter is carried out multiple times, or only the passage of the screen mesh is carried out multiple times. Furthermore, these can be used in combination.

In the present embodiment, by using the above production method, the resulting regenerated styrene-based resin composition tends to have the following characteristics.

The particle size distribution ($\mu$m) of the DMF-insoluble matters in the regenerated styrene-based resin composition (i.e., the dispersed matters in the composition dispersion obtained when the regenerated styrene-based resin composition is dissolved and dispersed in N,N-dimethylformamide) satisfy the following formula:

$$0.00 < (|d_{84\%} - d_{16\%}|) / 2 < 2.00$$

(where $d_{84\%}$ represents the 84% cumulative diameter on an integral distribution curve of the particle size, and $d_{16\%}$ represents the 16% cumulative diameter on the integral distribution curve of the particle size.)

(Particularly Preferred Method of Producing Regenerated Styrene-Based Resin Composition)

The method of producing the regenerated styrene-based resin composition of the present embodiment is a method for obtaining a regenerated styrene-based resin composition by melt-kneading:

a recycled polystyrene-based resin (A) containing a polymer matrix portion (a1), rubbery polymer particles (a2), and a toluene-insoluble fraction (1) after the osmium tetroxide treatment,
a rubber-modified polystyrene-based resin (B) containing a polymer matrix phase composed of a polystyrene-based resin (b1) and the domain phase containing rubbery polymer particles (b2), and
an optionally used styrene-based resin (C), the method comprising:

a step (D2) of specifying the total amount of the rubbery polymer particles (a2) and the toluene-insoluble fraction (1) after the osmium tetroxide treatment, contained in the recycled polystyrene-based resin (A), and the weight average molecular weight of the polymer matrix portion (a1);
a step (E) of selecting the content of the rubbery polymer particles (b2) and the weight average molecular weight of the polystyrene-based resin (b1) in the rubber-modified polystyrene-based resin (B), and the weight average molecular weight of the styrene-based resin (C); and
a step (F) of determining the blending amount of each of the recycled polystyrene-based resin (A), the rubber-modified polystyrene-based resin (B), and the styrene-based resin (C), so that the regenerated styrene-based resin composition satisfies the following (v) to (z):

(v) the amount of the polymer components including the polymer matrix portion (a1) of the recycled polystyrene-based resin (A), the polystyrene-based resin (b1) of the rubber-modified polystyrene-based resin (B), and the styrene-based resin (C) that does not contain rubbery polymer particles is controlled to be less than 64 to 90 mass% relative to the total amount of the obtained regenerated styrene-based resin composition;
(x) the amount of rubber components including the rubbery polymer particles (a2) and the rubbery polymer particles (b2) is controlled to be less than 9 to 30 mass% relative to the total amount of the obtained regenerated styrene-based resin composition;
(y) the amount of the toluene-insoluble fraction (1) after the osmium tetroxide treatment is controlled to be in the range of 1 to 6 mass% relative to the total amount of the obtained regenerated styrene-based resin composition; and
(z) the weight average molecular weight (Mw) of the entire polymer component is controlled to be in the range of 100,000 to 350,000; and

a step (G) of, upon melt-kneading according to the determined blending amounts, adjusting the melt-kneading conditions so that the particle size distribution ($\mu$m) of the DMF-insoluble matters in the regenerated styrene-based resin composition (i.e., the dispersed matters in the composition dispersion obtained when the regenerated styrene-based resin composition is dissolved and dispersed in N,N-dimethylformamide) satisfy the following formula (1):

[Math. 4]

$$0.00 < (|d_{84\%} - d_{16\%}|) / 2 < 2.00 \quad (1)$$

(where $d_{84\%}$ represents the 84% cumulative diameter on an integral distribution curve of the particle size, and $d_{16\%}$ represents the 16% cumulative diameter on the integral distribution curve of the particle size.)

It is preferable that the recycled polystyrene-based resin (A) is contained in an amount of 30 to 65 mass% relative to the total amount (100 mass%) of the regenerated styrene-based resin composition.

This results in a regenerated styrene-based resin composition that reduces the environmental impact, further suppresses the decline in mechanical strength, and exhibits excellent external appearance and an excellent heat creep resistance characteristic.

[Molded Article]

In applications of the regenerated styrene-based resin composition according to the present disclosure, the styrene-based resin composition is preferably subjected to injection blow molding, formation into sheet articles (including films), or injection molding, or extrusion molding.

[Cartridge]

As an example of a molded article made from the regenerated styrene-based resin composition of the present disclosure, a cartridge will be described below.

The present disclosure is a cartridge that can be attached to and detached from an image production apparatus that forms a color or monochrome image on a recording medium by an electrophotographic method, comprising a cartridge main body, a photosensitive drum, and charging means for charging a surface of the photosensitive drum,
wherein the cartridge main body contains a regenerated styrene-based resin composition including a recycled polystyrene-based resin (A) containing toluene-insoluble fraction after an osmium tetroxide treatment, a rubber-modified polystyrene-based resin (B) containing rubbery polymer particles (b2) that form a domain phase and polystyrene-based resin (b1) that forms a polymer matrix phase, and the toluene-insoluble fraction after the osmium tetroxide treatment is more than 0 to 10 mass% relative to the entire regenerated styrene-based resin composition.

A cartridge is provided which employs a regenerated styrene-based resin composition that suppresses the reduction of mechanical strength and chemical resistance, and exhibits excellent external appearance and an excellent heat creep resistance characteristic.

Cartridges, such as drum cartridges, that can be attached to and detached from the main body housing of the image production apparatus, are generally known. These cartridges contain toner and carrier in a developing container, and is provided with a mechanism for transporting the toner along with the carrier within the developing container. On the other hand, in the main body housing of the image production apparatus, a transfer roller is arranged to transfer toner supplied to the photosensitive drum onto a sheet. Therefore, it was confirmed that heat was generated in the photosensitive drum and the transfer roller, causing creep deformation in the cartridge per se, or in other parts such as engagement members (claw parts) or connection members with other components. Furthermore, since the amount of creep deformation depends on the stress on each part and the ambient temperature, the amount of creep deformation varies depending on the material of each part (type of resin, type of metal). As a result, a new problem arises in which the photosensitive drum becomes difficult to rotate stably. However, it was confirmed that a cartridge with an excellent heat creep resistance characteristic can be formed by using the regenerated styrene-based resin composition of the present embodiment (refer to the examples described later). In addition, a method for reducing the amount of creep deformation could be considered in which a reinforcing material such as metal plates is incorporated into engagement members (claw parts, etc.) or connection members with the cartridge or other components. However, by using the regenerated styrene-based resin composition of the present embodiment, it is possible to provide a cartridge, particularly a cartridge having a photosensitive drum with reduced creep deformation without using a reinforcing material such as metal plates.

The cartridge according to the present embodiment is a cartridge that can be attached to and detached from an image production apparatus and includes developing means for developing a toner image formed on the surface of an image bearing member as an electrostatic image by toner. Hereinafter, an example of the cartridge according to the present embodiment is described, but this is not to be construed as limiting.

The cartridge of the present embodiment preferably has a toner housing that contains toner and/or a photosensitive drum. In other words, the cartridge of the present embodiment may be an integrated cartridge where the toner housing portion (so-called toner cartridge portion) containing the toner and the drum portion (so-called drum cartridge portion) having a photosensitive drum are integrated, or may be a separable-type cartridge where the toner cartridge portion and the drum cartridge portion are separable. Therefore, the cartridge of the present embodiment encompasses a toner cartridge having a toner housing containing toner, a drum cartridge having a photosensitive drum, an integrated cartridge containing both the toner housing portion and the photosensitive drum, and a separable cartridge that includes the toner cartridge and the detachable drum cartridge.

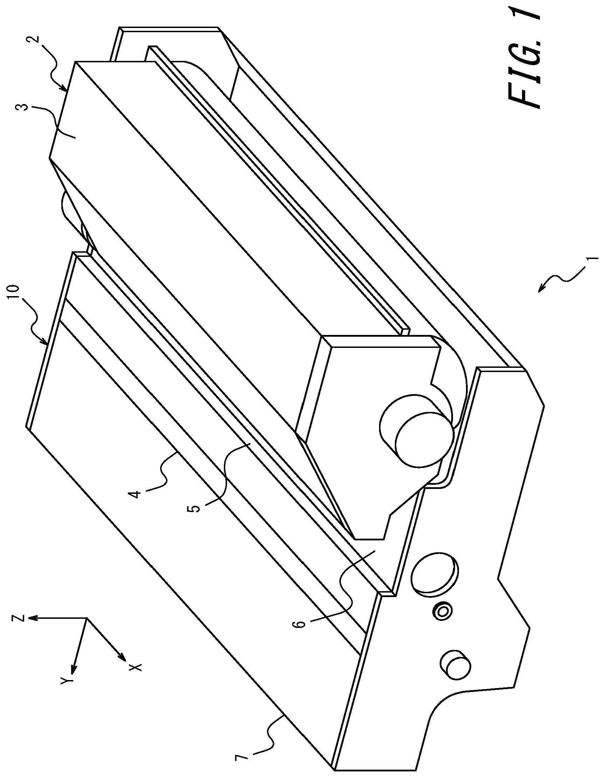

Hereinafter, referring to FIGS. 1 to 3, an example of a drum cartridge 10 having a photosensitive drum, a toner cartridge 2 having a toner housing 3 containing toner, and a separable cartridge will be described.

FIG. 1 is a schematic diagram of a so-called cartridge 1. The cartridge 1 illustrated in FIG. 1 is a separable cartridge where a toner cartridge 2 can be attached to and detached from the drum cartridge 10 is mounted to the drum cartridge 10. The separable cartridge is mounted to the main body housing of the image production apparatus. In this specification, a cartridge where the toner cartridge 2 is mounted to the drum cartridge 10 is referred to as a separable cartridge. In other words, the separable cartridge includes both the drum cartridge 10 and the toner cartridge 2.

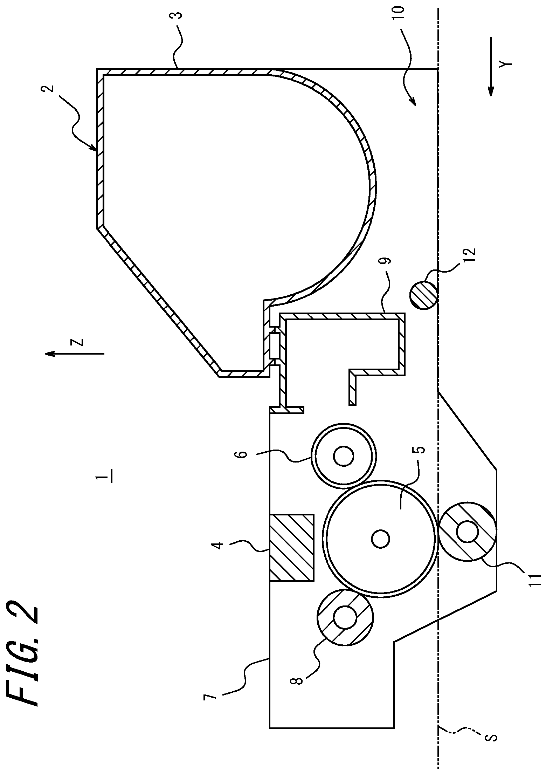

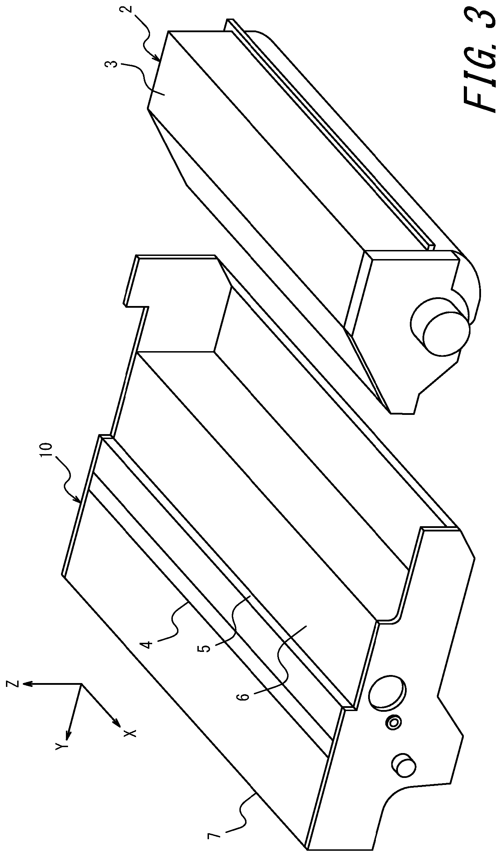

FIG. 2 is a cross-sectional view of the cartridge 1 illustrated in FIG. 1. FIG. 3 is a schematic diagram illustrating the state where the toner cartridge 2 and the drum cartridge 10 of the cartridge 1 illustrated in FIG. 1 are separated.

The drum cartridge 10 includes a drum cartridge main body 7 and a photosensitive drum 5. In addition, the drum cartridge 10 preferably further includes charging means 4, a cleaning roller 8, a transfer roller 11, a developing unit 9, and a transport roller 12. The drum cartridge 10 is configured such that the toner cartridge 2 is detachable (refer to FIG. 3). In addition, the drum cartridge main body 7 is a housing that supports the photosensitive drum 5, the charging means 4, the cleaning roller 8, the transfer roller 11, the transport roller 12, the developing unit 9, and the toner cartridge 2. The drum cartridge main body 7 has a positioning projection (not illustrated) for positioning a bearing (not illustrated). The photosensitive drum 5 is rotatable about a drum shaft that extends in the axial direction.

In the following description, "axial direction" refers to the direction in which the drum shaft of the photosensitive drum 5 extends, and represents the X-direction in FIG. 1. The "transport direction" refers to the direction extending from the transport roller 12 toward the transfer roller 11, and represents the Y-direction in FIG. 1. The "transport direction" is the direction extending from the lower end of the transport roller 12 toward the nip position of the sheet S such as paper by the photosensitive drum 5 and the transfer roller 11. The direction perpendicular to both the "axial direction" and the "transport direction" is referred to as the "perpendicular direction" and represents the Z-direction in FIG. 1.

The charging means 4 has the function to charge the photosensitive drum 5. Examples of the charging means 4 include scorotron type or coronatron type charging means, or a charging roller. The cleaning roller 8 has the function of cleaning the photosensitive drum 5. The cleaning roller 8 is rotatable about a cleaning roller shaft extending in the axial direction. The cleaning roller 8 faces the surface of the photosensitive drum 5 and is located on the downstream side of the photosensitive drum 5 in the transport direction.

The transfer roller 11 has the function to transfer the toner supplied to the photosensitive drum 5 from the photosensitive drum 5 to the sheet S. The transfer roller 11 is rotatable about a transfer roller shaft extending in the axial direction. The transfer roller 11 faces the surface of the photosensitive drum 5 and is located on the other side (the lower side in FIG. 1) of the photosensitive drum 5 in the perpendicular direction. The transfer roller 11 can nip and transport the sheet S with the photosensitive drum 5.

When the drum cartridge 10 is mounted in the main body housing of the image production apparatus, the transport roller 12 has the function of rotating in synchronization with the main body roller of the image production apparatus and conveying the sheet S together with the main body roller. The transport roller 12 is rotatable about a transport roller shaft extending in the axial direction. The transport roller 12 is positioned at a predetermined distance from the upstream side of the photosensitive drum 5 in the transport direction.

The drum cartridge 10 may further include a drum gear if necessary. The driving force input from the drum gear can be transmitted to the photosensitive drum 5, as well as to the cleaning roller 8 and the transfer roller 11 through the gear train.

The developing unit 9 is positioned between the transport roller 12 and the photosensitive drum 5 in the transport direction. The developing unit 9 includes a magnetic roller 6, a blade, a blade holder, a developing container, and a storage container. The magnetic roller 6 is a roller that supplies toner to the photosensitive drum 5. The magnetic roller 6 is rotatable about a magnetic roller shaft extending in the axial direction. The magnetic roller 6 faces the surface of the photosensitive drum 5 and is located on the upstream side of the photosensitive drum 5 in the transport direction. The magnetic roller 6 is spaced apart from the surface of the photosensitive drum 5.

The developing container is a container that holds the toner (not illustrated) and carrier (not illustrated) supplied to the magnetic roller 6. The carrier may be a magnetic material. One example of the carrier is iron powder. The toner (not illustrated) that has been stored in the toner cartridge 2 (or inside the toner housing 3) is replenished to the developing container. The carrier may be a magnetic material other than iron powder.

The toner cartridge 2 may further include a toner coupling. The toner coupling is located at one end of the axial direction. The toner coupling is the part where the driving force from the apparatus main body of the image production apparatus is input into the toner cartridge 2. The driving force input from the toner coupling is transmitted to components such as an agitator through the gear train.

In the embodiment described above, the separable-type cartridge where the toner cartridge 2 is mounted on the drum cartridge 10 has been described, but the cartridge 1 of the present disclosure is not limited to this cartridge. For example, the present disclosure can also be applied to a drum cartridge 10 that does not have a toner cartridge 2 mounted thereon, or to an integrated cartridge where the toner cartridge 2 or the components housed in the toner cartridge 2 are housed within the drum cartridge 10.

In the embodiment described above, a laser printer has been used as one example of an image production apparatus, but the present disclosure is not limited to laser printers, and may be applied to other image production apparatuses such as inkjet printers, copiers, and multifunctional printers.

EXAMPLES

Next, the present disclosure will be described in more detail with reference to examples and comparative examples. However, the present disclosure is not limited to these examples. The methods for analyzing and evaluating the resins and molded articles used in the examples and comparative examples are described below.

[Evaluation of Properties of Each of Resins and Resin Compositions]

(1) Measurement of Weight Average Molecular Weight

The weight average molecular weight (Mw) of each of the resins and resin compositions produced in the examples and comparative examples was measured using gel permeation chromatography (GPC) under the following conditions:

Measurement apparatus: HLC-8220 manufactured by Tosoh Corp.
Fractionation column: Two TSK gel Super HZM-H (inner diameter: 4.6 mm) manufactured by Tosoh Corp., connected in series
Guard column: TSK guard column Super HZ-H manufactured by Tosoh Corp.
Measuring solvent: Tetrahydrofuran (THF)
Sample concentration: After dissolving 5 mg of the sample to be measured in 10 mL of solvent, filtration was carried out with a 0.45 $\mu$m filter.
Injection amount: 10 $\mu$L
Measuring temperature: 40 °C
Flow rate: 0.35 mL/min
Detector: differential refractometer
Eleven types of TSK standard polystyrene (F-850, F-450, F-128, F-80, F-40, F-20, F-10, F-4, F-2, F-1, and A-5000) by Tosoh Corp. were used to construct a calibration curve. The calibration curve was constructed using a first-order approximation.

(2) Measurement of Melt Mass Flow Rate (MFR)

The melt mass flow rate (g/10 min) of each of the resins and resin compositions produced in the examples and comparative examples was measured under the conditions of 200 °C and a load of 49 N according to ISO 1133.

(3) Measurement of Vicat Softening Temperature

The Vicat softening temperature of each of the resins and resin compositions produced in the examples and comparative examples was measured according to ISO 306. The applied load was 50 N, and the heating rate was 50 °C/h.

(4) Calculation of Content (mass%) of Each Monomer Unit of Styrene-Based Monomer Unit, (Meth)Acrylic Acid Ester Monomer Unit, and (Meth)Acrylic Acid Monomer Unit

(NMR Measurement)

A resin composition was quantified from the integral ratios of a spectrum measured with a proton-nuclear magnetic resonance ($^1$H-NMR) spectrometer.

Preparation of sample: 30 mg of resin pellet was dissolved in 0.75 ml of d6-DMSO and heated at 60 °C for 6 hours.

Measurement apparatus: JEOL Ltd. JNM ECA-500

Measurement conditions: measurement temperature: 25 °C, observation nucleus: 1H, integration count: 64, and repetition time: 11 seconds.

(Attribution of NMR Spectrum)

The spectrum detected in DMSO heavy solvent was attributed as follows: the peak at 0.5 to 1.5 ppm was hydrogen of □-methyl groups of methacrylic acid, methyl methacrylate, and six-membered ring acid anhydride, the peak at 1.6 to 2.1 ppm was hydrogen of methylene groups of the polymer main chain, the peak at 3.5 ppm was hydrogen of carboxylic acid ester (-COOCH$_3$) of methyl methacrylate, and the peak at 12.4 ppm was hydrogen of carboxylic acid of methacrylic acid. In addition, the peak at 6.5 to 7.5 ppm was hydrogen of the aromatic ring of styrene. Because the content of the 6-membered ring acid anhydride was small in the resin of the present embodiment, it is usually difficult to quantify it by the method of the present measurement.

(5) Measurement of Content of Each Monomer Unit

The content of each monomer unit contained in the resin composition prepared in the examples and comparative examples was measured by pyrolysis GC/MS under the following conditions:

<Measuring Conditions>

Pyrolysis unit
Apparatus: PY-3030D manufactured by Frontier Lab
Furnace temperature: 600 °C
Boundary temperature: 300 °C
GC/MS
Apparatus: GCMS-QP2020NX manufactured by Shimadzu Corporation
Column: Ultra Alloy-5

(Length: 30 m, film thickness: 0.25 $\mu$m, diameter: 0.25 mm$\phi$)
Column temperature: Held at 50 °C for 5 minutes $\rightarrow$ heated at 10 °C/min $\rightarrow$ heated at 7 °C/min from 100 °C $\rightarrow$ held at 300 °C for 10 minutes

Inlet temperature: 300 °C
Detector temperature: 300 °C
Split ratio: 1/300
Carrier gas: Helium
Detection method: Mass spectrometer (MSD)
Sample amount: 50 $\mu$g
Detection mode: Scan mode or SIM mode

In detecting each monomer peak, appropriate adjustments of conditions, such as pretreatments, e.g., sample dilution ratios, columns used, and detection conditions, may be made to avoid peak overlaps or saturation of peak intensity.

(6) Measurement of Rubbery Polymer Particles

Each of the regenerated styrene-based resin compositions of the following examples and the resin compositions of the comparison examples was stained with osmium tetraoxide. Thereafter, five ultrathin sections with a thickness of 100 nm were prepared, and five bright field images (magnification: $\times$10,000) were obtained using a transmission electron microscope. Then, the five bright field images were summed, and the area average particle diameter was calculated using the following formula (N1), and was used as the weight average diameter of the rubbery polymer particles:

$$\text{Weight average diameter} = \Sigma ni Dri^4 / \Sigma ni Dri^3 \qquad (N1)$$

(In the above mathematical formula (N1), ni is the number of rubbery polymer particles having a particle diameter Dri, wherein Dri was the particle size calculated as the equivalent circle diameter from the area of the particles in the bright field image.) The above-described analysis is performed as follows using image analysis software ImageJ (developed by the National Institutes of Health, USA). Each of the obtained images was binarized by the Otsu method, and a white portion other than the rubbery polymer particles (corresponding to the matrix resin phase) was filled. Polymer particles in contact with each other were divided by the Watershed processing, and the area of each rubbery polymer particle was calculated and then converted into an equivalent circle diameter. The number-based histogram and the average value were derived from the obtained numerical group of equivalent circle diameters. The apparatus and the like used are as follows.

Ultramicrotome: UC7 / Leica
Transmission electron microscope: HT7700 / Hitachi High-Technologies Corporation

(7) Measurement of Charpy Impact Strength

The test specimen used for measuring the Charpy impact strength was a strip with specified dimensions cut out from the central parallel section of a 1A-type dumbbell prepared by the method described in the following "Method for preparing ISO dumbbell test specimens" section. The test was conducted in accordance with ISO 179, and the Charpy impact strength ($kJ/m^2$) was measured with a notch.

(8) Measurement of Tensile Yield Stress

The test specimen used for measuring the tensile yield stress was a 1A-type dumbbell prepared by the method described in the following "Method for preparing ISO dumbbell test specimens" section using each resin composition manufactured in the examples and comparative examples. The tensile yield stress (MPa) was measured using the test specimen in accordance with ISO 527-1.

(9) Measurement of Tensile Strain at Break

Injection molded pieces were prepared using each resin composition manufactured in the examples and comparative examples at 220 °C in accordance with JIS K 7152, and the tensile strain at break (%) was measured in accordance with JIS K 7161 ISO 527-1.

(10) Measurement of Flexural Modulus

Each resin composition manufactured in the examples and comparative examples was injection molded into an ISO type 1A dumbbell test specimen, and the flexural modulus (MPa) was measured according to ISO 178 using a strip with specified dimensions cut out from the central parallel section of the dumbbell.

(11) Measurement of Load Deflection Temperature

Each resin composition manufactured in the examples and comparative examples was injection molded into an ISO type 1A dumbbell test specimen, and the load deflection temperature (°C) was measured under the condition of a load of 1.8 MPa in accordance with ISO 75-1 and 75-2 using a strip with specified dimensions cut out from the central parallel section of the dumbbell. In the measurement of the load deflection temperature, "AUTO HDT Tester 6A-2V" manufactured by Toyo Seiki Co., Ltd. was used.

(12) Measurement of Chemical Resistance (Retention Ratio of Physical Property)

To evaluate the chemical resistance of resin compositions manufactured in the examples and comparative examples, a specified grease (MOLYKOTE EM-50LP, DuPont Toray Specialty Materials K. K.) was applied to the central parallel section of an ISO type 1A dumbbell test specimen, and aging treatment was performed for 168 hours at 60 °C in a hot air circulating oven. After the grease was wiped off with a cloth, the appearance was checked. The tensile fracture strain was measured, and the retention ratio (%) was calculated by comparing it with the initial value.

Chemical resistance (retention ratio of physical property) (%) = (tensile fracture strain of the sample after 168 hours of aging with grease applied)/(tensile fracture strain of the sample without application of grease and without aging treatment for 168 hours)

(13) Measurement of Heat creep resistance characteristic

A bending creep test was conducted using the three-point load method in accordance with ISO 899-2 on a strip with specified dimensions cut out from the central parallel section of a 1A-type dumbbell test specimen. The conditions were as follows: the ambient temperature was 60 °C and the load was 29.4 N, and the strain (mm) after a certain time (100 hours) was used for evaluation.

(14) External Appearance

A three-layered plate with dimensions of 120 × 50 mm and thicknesses of 2.5 mm, 2.0 mm, and 1.0 mm was molded using an injection molding machine. The flat area with a thickness of 2.0 mm at the center of the plate (40 × 50 mm) was observed to check whether black foreign objects were present and the 60° gloss was measured. The black foreign objects were classified by size according to the contaminant measurement chart (JIS P 8208), and the number of specks was counted.

If all the observed black foreign objects were 0.1 mm$^2$ or smaller, the result was marked as O; if the number of black foreign objects greater than 0.1 mm$^2$ to 0.5 mm$^2$ was 20 or less and the number of black foreign objects greater than 0.5 mm$^2$ to 0.7 mm$^2$ was 2 or less, the result was marked as $\triangle$; otherwise, the result was marked as x.

The gloss was measured using a GM26D gloss meter (Murakami Color Research Laboratory Co., Ltd.) in accordance with JIS Z 8741 to measure the 60° mirror gloss. A gloss value of 35 or lower was marked as $\triangle$, and a value of 36 or higher was marked as O (pass).

(15) Laser Diffraction Method Measurement

In a polypropylene-bade disposable cup, 20 mg of each regenerated styrene-based resin composition of the examples and each resin composition of the comparative examples, along with 20 mL of N,N-dimethylformamide, were placed and dissolved and dispensed by ultrasonic vibration for 15 minutes. While vibrating, a part of the turbid sample was taken, placed into a measurement cell, and stirred with a rotor. The particle sizes (d84%, d50%, d16%) and integral distribution curves of the dispersed matters in the N,N-dimethylformamide solution containing the regenerated styrene-based resin composition or the resin composition were measured using a laser diffraction particle size measurement device (LA-960V2, manufactured by HORIBA, Ltd.). At this time, the refractive index of the sample was set to 1.6-0.00i, and the refractive index of the solvent was set to 1.428. In the examples, particle size distributions on the volume basis were employed.

For example, the particle size distribution on the volume basis ($d_{84\%}$ - $d_{16\%}$) of the regenerated styrene-based resin composition in Example 1 was 1.18, and the average particle size (d50%) was 1.7 $\mu$m. On the other hand, the particle size distribution on the number basis ($d_{84\%}$ - $d_{16\%}$) of the regenerated styrene-based resin composition in Example 1 was 0.90, and the average particle size (d50%) was 1.2 $\mu$m. In other examples as well, the particle size distributions on the number basis tended to have smaller average particle sizes and narrower distributions.

(16) Measurement of Weld Strength Retention Ratio (Bending Strength)

Each regenerated styrene-based resin composition obtained in the examples and comparative examples was molded (molding temperature: 220 °C, mold temperature: 45 °C, injection pressure: 7.5 MPa (50%), injection speed: 215 cm/min (50%), single-speed single-pressure molding) using an injection molding machine (model PS40E, manufactured by Nissei Plastic Industrial Co., Ltd.) to which a mold was attached to form specimens such that the molten resin of the regenerated styrene-based resin composition was flowed into both ends in the length direction of a shape with length of 125 mm, a width of 13 mm, and a thickness of 3.2 mm to form a weld at the center part of the length direction during molding. The molded specimens were tested according to the method specified in ISO 527, with the exception that the chuck gap distance was set to 50 mm and the tensile speed was set to 1.5 mm/min, to determine the tensile strength. The weld strength retention ratio was then calculated using the following formula. The average of N = 5 samples was used as the measurement value.

Weld strength retention ratio (%) = (bending strength with weld)/ (bending strength without weld) × 100

[Raw Materials used in Examples and Comparative Examples]

The properties of the recycled polystyrene-based resin (A), the rubber-modified polystyrene-based resin (B), and the styrene-based resin (C) used in the examples and comparative examples are listed in Table 1. The additives used in the examples and comparative examples are as follows.

[Table 1-1]

| Table 1-1 | | Composition table | Molecular Weight (Mw) | Amount of rubbery polymer particles in each component (mass %) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Average particle size of toluene insoluble fraction (1) after osmium tetraoxide treatment | Example 1 | Example 2 | Example 3 | Example 4 | Example 5 | Example 6 |
|---|---|---|---|---|---|---|---|---|---|---|---|---|---|---|
| Recycled polystyrene-based resin (A) (parts by mass) | Recycled material GPPS | Resin (A1) | 28.0E+4 | | | 0.10% | 0.03 mm | | 50 | | | | | |
| | | Resin (A2) | 27.0E+4 | | | 0.02% | 0.02 mm | | | 60 | | | | |
| | | Resin (A3) | 28.0E+4 | | | 24% | 0.15 mm | | | | 40 | 50 | | |
| | | Resin (A4) | 24.0E+4 | | | 8% | 0.2mm | | | | | | | |
| | | Resin (AS) | 12.0E+4 | | | 3% | 0.1 mm | | | | | | | |
| | | Resin (A6) | 24.0E+4 | | | 20% | 0.005 mm | | | | | | | |
| | | Resin (A7) | 22.0E+4 | | | 22% | 0.006 mm | | | | | | | |
| | | Resin (A8) | 8.0E+4 | | | 0.1% | 0.01 mm | | | | | | | |
| | | Resin (A9) | 28.0E+4 | | | 0.0002% | 0.002 mm | | | | | | | |
| | Recycled material HIPS | Resin (A10) | 19.0E+4 | 3.9% | 18% | 0.20% | 0.1 mm | 2.8 | | | | | | 50 |
| | | Resin (A11) | 21.0E+4 | 6.0% | 23% | 1% | 0.1 mm | 2.4 | | | | | | |
| | | Resin (A12) | 21.0E+4 | 3.0% | 21% | 10% | 0.1 mm | 1.9 | | | | | 35 | |
| | | Resin (A13) | 33.0E+4 | 8.0% | 26% | 1% | 0.02 mm | 2.5 | | | | | | |
| | | Resin (A14) | 22.0E+4 | 12.0% | 55% | 25% | 0.1 mm | 2.0 | | | | | | |
| | | Resin (A15) | 19.5E+4 | 0.3% | 2.1% | 1.0% | 0.1 | 1.9 | | | | | | |

EP 4 603 538 A1

28

| Table 1-1 | | Composition table | Molecular Weight (Mw) | Amount of rubbery polymer particles in each component (mass %) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Average particle size of toluene insoluble fraction (1) after osmium tetraoxide treatment | Example 1 | Example 2 | Example 3 | Example 4 | Example 5 | Example 6 |
|---|---|---|---|---|---|---|---|---|---|---|---|---|---|---|
| Rubber modified polystyrene-based resin (B) (parts by mass) | Virgin material HIP S | Virgin material (B1) | 18.0E+4 | 8.8% | 26% | | | 1.7 | 50 | 40 | 50 | 50 | | 50 |
| | | Virgin material (B2) | 21.0E+0 | 11% | 30% | | | 1.7 | | | | | | |
| | | Virgin material (B3) | 22.0E+4 | 6.2% | 21% | | | 2.3 | | | | | | |
| | | Virgin material (B4) | 15.0E+4 | 8% | 24% | | | 1.9 | | | | | | |
| | | Virgin material (B5) | 23.0E+4 | 8.3% | 25% | | | 1.1 | | | | | 15 | |
| | | Virgin material (B6) | 17.0E+4 | 12.8% | 33% | | | 3.6 | | | | | | |
| | | Virgin material (B7) | 17.0E+4 | 8% | 25% | | | 3.2 | | | | | | |
| | | Virgin material (B8) | 12.0E+4 | 6.2% | 27% | | | 2.3 | | | | | | |
| Styrene-based resin (C) (parts by mass) | Virgin material GPPS | Virgin material (C1) | 19.0E+4 | | | | | | | | | | 50 | |
| | | Virgin material (C2) | 28.0E+4 | | | | | | | | 10 | | | |
| | | Virgin material (C3) | 38.0E+4 | | | | | | | | | | | |
| Additive (parts by mass) | | Antioxidant | | | | | | | 0.15 | 0.15 | 0.15 | 0.15 | 0.15 | 0.15 |
| | | Mold release agent | | | | | | | 0.3 | 0.3 | 0.3 | 0.3 | 0.3 | 0.3 |
| | | Plasticizer | | | | | | | 0.5 | 0.5 | 0.5 | 0.5 | 0.5 | 0.5 |

| Table 1-1 | Composition table | Molecular Weight (Mw) | Amount of rubbery polymer particles in each component (mass %) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Average particle size of toluene insoluble fraction (1) after osmium tetraoxide treatment | Example 1 | Example 2 | Example 3 | Example 4 | Example 5 | Example 6 |
|---|---|---|---|---|---|---|---|---|---|---|---|---|---|
| Mesh filtration step | | | | | | | | (80 mesh) | (80 mesh) | (80 mesh) | 120 mesh | (80 mesh) | (80 mesh) |

EP 4 603 538 A1

[Table 1-2]

| Table 1-2 | | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Example 7 | Example 8 | Example 9 | Example 10 | Example 11 | Example 12 | Example 13 |
|---|---|---|---|---|---|---|---|---|---|---|---|---|---|---|---|
| Recycled polystyrene-based resin (A) (parts by mass) | Recycled material GPPS | Resin (A1) | 28.0E+4 | | | 0.10% | 0.03 mm | | | 50 | 50 | | | | 50 |
| | | Resin (A2) | 27.0E+4 | | | 0.02% | 0.02 mm | | | | | | | | |
| | | Resin (A3) | 28.0E+4 | | | 24% | 0.15 mm | | | | | | | | |
| | | Resin (A4) | 24.0E+4 | | | 8% | 0.2 mm | | | | | | | | |
| | | Resin (A5) | 12.0E+4 | | | 3% | 0.1 mm | | | | | 50 | 50 | 50 | |
| | | Resin (A6) | 24.0E+4 | | | 20% | 0.005 mm | | | | | | | | |
| | | Resin (A7) | 22.0E+4 | | | 22% | 0.006 mm | | | | | | | | |
| | | Resin (A8) | 8.0E+4 | | | 0.1% | 0.01 mm | | | | | | | | |
| | | Resin (A9) | 28.0E+4 | | | 0.0002% | 0.002 mm | | | | | | | | |
| | Recycled material HIPS | Resin (A10) | 19.0E+4 | 3.9% | 18% | 0.20% | 0.1 mm | 2.8 | 95 | | | | | | |
| | | Resin (A11) | 21.0E+4 | 6.0% | 23% | 1% | 0.1 mm | 2.4 | | 45 | | | | | |
| | | Resin (A12) | 21.0E+4 | 3.0% | 21% | 10% | 0.1 mm | 1.9 | | | | | | | |
| | | Resin (A13) | 33.0E+4 | 8.0% | 26% | 1% | 0.02 mm | 2.5 | | | | | | | |
| | | Resin (A14) | 22.0E+4 | 12.0% | 55% | 25% | 0.1 mm | 20 | | | | | | | |
| | | Resin (A15) | 19.5E+4 | 0.3% | 2.1% | 1.0% | 0.1 | 1.9 | | | | | | | |

(continued)

| Table 1-2 | | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Example 7 | Example 8 | Example 9 | Example 10 | Example 11 | Example 12 | Example 13 |
|---|---|---|---|---|---|---|---|---|---|---|---|---|---|---|---|
| Rubber modified polystyrene-based resin (B) (parts by mass) | Virgin material HIPS | Virgin material (B 1) | 18.0E+4 | 8.8% | 26% | | | 1.7 | 5 | 5 | | 50 | | | |
| | | Virgin material (B2) | 21.0E+0 | 11% | 30% | | | 1.7 | | | | | | | |
| | | Virgin material (B3) | 22.0E+4 | 6.2% | 21% | | | 2.3 | | | | 30 | | | |
| | | Virgin material (B4) | 15.0E+4 | 8% | 24% | | | 1.9 | | | | | 50 | | |
| | | Virgin material (B5) | 23.0E+4 | 8.3% | 25% | | | 1.1 | | | | | | | 50 |
| | | Virgin material (B6) | 17.0E+4 | 12.8% | 33% | | | 3.6 | | | | | | | |
| | | Virgin material (B7) | 17.0E+4 | 8% | 25% | | | 3.2 | | | | | | 50 | |
| | | Virgin material (B8) | 12.0E+4 | 6.2% | 27% | | | 2.3 | | | | | | | |
| Styrene-based resin (C) (parts by mass) | Virgin material GPPS | Virgin material (C1) | 19.0E+4 | | | | | | | | | | | | |
| | | Virgin material (C2) | 28.0E+4 | | | | | | | | | | | | |
| | | Virgin material (C3) | 38.0E+4 | | | | | | | | | 20 | | | |
| Additive (parts by mass) | | Antioxidant | | | | | | | 0.15 | 0.15 | 0.15 | 0.15 | 0.15 | 0.15 | 0.15 |
| | | Mold release agent | | | | | | | 0.3 | 0.3 | 0.3 | 0.3 | 0.3 | 0.3 | 0.3 |
| | | Plasticizer | | | | | | | 0.5 | 0.5 | 0.5 | 0.5 | 0.5 | 0.5 | 0.5 |

| Table 1-2 | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene insoluble (1) after osmium tetraoxide treatment (mass%) | Average particle size of toluene insoluble fraction (1) after osmium tetraoxide treatment | Example 7 | Example 8 | Example 9 | Example 10 | Example 11 | Example 12 | Example 13 |
|---|---|---|---|---|---|---|---|---|---|---|---|---|---|---|
| Mesh filtration step | | | | | | | | (80 mesh) | (80 mesh) | (80 mesh) | (80 mesh) | (80 mesh) | (80 mesh) | (80 mesh) |

[Table 1-3]

| Table 1-3 | | Composition table | Molecular Weight (Mw) | Amount of rubbery polymer particles in each component (mass%) | Amount of rubbery polymer particles in each component (mass%) | Toluene ins oluble fraction (2) before osmium tetraoxide treatment (GEL%) | Toluene insoluble (1) after osmium tetraoxide treatment (mass %) | Average particle size of toluene insoluble fraction (1) after osmium tetraoxide treatment | Example 14 | Example 15 | Example 16 | Example 17 | Example 18 | Example 19 | Example 20 |
|---|---|---|---|---|---|---|---|---|---|---|---|---|---|---|---|
| Recycled polystyrene-based resin (A) (parts by mass) | Recycled material GPPS | Resin (A1) | 28.0E+4 | | | 0.10% | 0.03 mm | | 50 | | | 85 | | | |
| | | Resin (A2) | 27.0E+4 | | | 0.02% | 0.02 mm | | | | | | | | |
| | | Resin (A3) | 28.0E+4 | | | 24% | 0.15 mm | | | | | | | | |
| | | Resin (A4) | 24.0E+4 | | | 8% | 0.2 mm | | | | | | | | |
| | | Resin (A5) | 12.0E+4 | | | 3% | 0.1 mm | | | | | | | | |
| | | Resin (A6) | 24.0E+4 | | | 20% | 0.005 mm | | | 40 | | | | | |
| | | Resin (A7) | 22.0E+4 | | | 22% | 0.006 mm | | | | | | | | |
| | | Resin (A8) | 8.0E+4 | | | 0.1% | 0.01 mm | | | | | | | | |
| | | Resin (A9) | 28.0E+4 | | | 0.0002% | 0.002 mm | | | | 50 | | | | |
| | Recycled material HIPS | Resin (A10) | 19.0E+4 | 3.9% | 18% | 0.20% | 0.1 mm | 2.8 | | | | | | | |
| | | Resin (A11) | 21.0E+4 | 6.0% | 23% | 1% | 0.1 mm | 2.4 | | | | | | | |
| | | Resin (A12) | 21.0E+4 | 3.0% | 21% | 10% | 0.1 mm | 1.9 | | | | | | 45 | 60 |
| | | Resin (A13) | 33.0E+4 | 8.0% | 26% | 1% | 0.02 mm | 2.5 | | | | | | | |
| | | Resin (A14) | 22.0E+4 | 12.0% | 55% | 25% | 0.1 mm | 2.0 | | | | | 35 | | |
| | | Resin (A15) | 19.5E+4 | 0.3% | 2.1% | 1.0% | 0.1 | 1.9 | | | | | | | |

| Table 1-3 | | Composition table | Molecular Weight (Mw) | Amount of rubbery polymer particles in each component (mass%) | Amount of rubbery polymer particles in each component (mass%) | Toluene ins oluble fraction (2) before osmium tetraoxide treatment (GEL%) | Toluene insoluble (1) after osmium tetraoxide treatment (mass %) | Average particle size of toluene insoluble fraction (1) after osmium tetraoxide treatment | Example 14 | Example 15 | Example 16 | Example 17 | Example 18 | Example 19 | Example 20 |
|---|---|---|---|---|---|---|---|---|---|---|---|---|---|---|---|
| Rubber modified polystyrene-based resin (B) (parts by mass) | Virgin material HIPS | Virgin material (B1) | 18.0E+4 | 8.8% | 26% | | | 1.7 | | 60 | | | | | |
| | | Virgin material (B2) | 21.0E+0 | 11% | 30% | | | 1.7 | | | 50 | | | 30 | |
| | | Virgin material (B3) | 22.0E+4 | 6.2% | 21% | | | 2.3 | | | | 15 | | | |
| | | Virgin material (B4) | 15.0E+4 | 8% | 24% | | | 1.9 | | | | | | | |
| | | Virgin material (B5) | 23.0E+4 | 8.3% | 25% | | | 1.1 | | | | | | | |
| | | Virgin material (B6) | 17.0E+4 | 12.8% | 33% | | | 3.6 | 50 | | | | 65 | | 35 |
| | | Virgin material (B7) | 17.0E+4 | 8% | 25% | | | 3.2 | | | | | | | |
| | | Virgin material (B8) | 12.0E+4 | 6.2% | 27% | | | 2.3 | | | | | | | |
| Styrene-based resin (C) (parts by mass) | Virgin material GPPS | Virgin material (C1) | 19.0E+4 | | | | | | | | | | | 25 | 5 |
| | | Virgin material (C2) | 28.0E+4 | | | | | | | | | | | | |
| | | Virgin material (C3) | 38.0E+4 | | | | | | | | | | | | |
| Additive (parts by mass) | | Antioxidant | | | | | | | 0.15 | 0.15 | 0.15 | 0.15 | 0.15 | 0.15 | 0.15 |
| | | Mold release agent | | | | | | | 0.3 | 0.3 | 0.3 | 0.3 | 0.3 | 0.3 | 0.3 |
| | | Plasticizer | | | | | | | 0.5 | 0.5 | 0.5 | 0.5 | 0.5 | 0.5 | 0.5 |

| Table 1-3 | Composition table | Molecular Weight (Mw) | Amount of rubbery polymer particles in each component (mass%) | Amount of rubbery polymer particles in each component (mass%) | Toluene ins oluble fraction (2) before osmium tetraoxide treatment (GEL%) | Toluene insoluble (1) after osmium tetraoxide treatment (mass %) | Average particle size of toluene insoluble fraction (1) after osmium tetraoxide treatment | Example 14 | Example 15 | Example 16 | Example 17 | Example 18 | Example 19 | Example 20 |
|---|---|---|---|---|---|---|---|---|---|---|---|---|---|---|
| Mesh filtration step | | | | | | | | (80 mesh) | (80 mesh) | (80 mesh) | (80 mesh) | (80 mesh) | (80 mesh) | (80 mesh) |

[Table 1-4]

| Table 1-4 | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene Insoluble (1) after osmium tetraoxide treatment (mass%) | Average particle size of toluene Insoluble fraction (1) after osmium tetraoxide treatment | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|---|---|---|---|---|---|---|
| Recycled material GPPS | Resin (A1) | 28.0E+-4 | | | 0.10% | 0.03 mm | | | | | | | 95 | | | | |
| | Resin (A2) | 27.0E+-4 | | | 0.02% | 0.02 mm | | | | | | | | | | | |
| | Resin (A3) | 28.0E+-4 | | | 24% | 0.15 mm | | 50 | 50 | | | | | | | | |
| | Resin (A4) | 24.0E+-4 | | | 8% | 0.2 mm | | | | | | | | | | | |
| | Resin (A5) | 12.0E+-4 | | | 3% | 0.1 mm | | | | | | | | | | | |
| | Resin (A6) | 24.0E+-4 | | | 20% | 0.005 mm | | | | 60 | | | | | | | |
| | Resin (A7) | 22.0E+-4 | | | 22% | 0.006 mm | | | | | | | | | | | |
| | Resin (A8) | 8.0E+4 | | | 0.1% | 0.01 mm | | | | | 60 | | | | | | |
| | Resin (A9) | 28.0E+-4 | | | 0.0002% | 0.002 mm | | | | | | | | | | | |

| Table 1-4 | | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene Insoluble (1) after osmium tetraoxide treatment (mass%) | Average particle size of toluene Insoluble fraction (1) after osmium tetraoxide treatment | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|---|---|---|---|---|---|---|---|
| Recycled polystyrene-based resin (A) (parts by mass) | Recycled material HIPS | Resin (A10) | 19.0E+-4 | 3.9% | 18% | 0.20% | 0.1 mm | 2.8 | | | | | | | | | | |
| | | Resin (A11) | 21.0E+-4 | 6.0% | 23% | 1% | 0.1 mm | 2.4 | | | | | | | | 100 | | |
| | | Resin (A12) | 21.0E+-4 | 3.0% | 21% | 10% | 0.1 mm | 1.9 | | | | | | | | | 100 | |
| | | Resin (A13) | 33.0E+-4 | 8.0% | 26% | 1% | 0.02 mm | 2.5 | | | | | 40 | | | | | |
| | | Resin (A14) | 22.0E+-4 | 12.0% | 55% | 25% | 0.1 mm | 2.0 | | | | | | | | | | |
| | | Resin (A15) | 19.5E+-4 | 0.3% | 2.1% | 1.0% | 0.1 | 1.9 | | | | | | | | | | 100 |

(continued)

**Table 1-4**

| Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene Insoluble (1) after osmium tetraoxide treatment (mass%) | Average particle size of toluene insoluble fraction (1) after osmium tetraoxide treatment | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|---|---|---|---|---|---|
| Virgin material (B1) | 18.0E+4 | 8.8% | 26% | | | 1.7 | 50 | | 40 | | | | 50 | | | |
| Virgin material PA | 21.0E+0 | 11% | 30% | | | 1.7 | | 50 | | | | | | | | |
| Virgin material (B3) | 22.0E+4 | 6.2% | 21% | | | 2.3 | | | | | | 5 | | | | |
| Virgin material (B4) | 15.0E+4 | 8% | 24% | | | 1.9 | | | | | | | | | | |
| Virgin material (B5) | 23.0E+4 | 8.3% | 25% | | | 1.1 | | | | | | | | | | |
| Virgin material (B6) | 17.0E+4 | 12.8% | 33% | | | 3.6 | | | | | | | | | | |
| Virgin material (B7) | 17.0E+4 | 8% | 25% | | | 3.2 | | | | | | | | | | |
| Virgin material (B8) | 12.0E+4 | 6.2% | 27% | | | 2.3 | | | | 40 | | | | | | |

Rubber modified polystyrene-based resin (B) (parts by mass) — Virgin material HIPS

| Table 1-4 | | Composition table | Molecular Weight (Mw) | Amount of rubbery polymer particles in each component (mass%) | Amount of rubbery polymer particles in each component (mass%) | Toluene insoluble fraction (2) before osmium tetraoxide treatment (GEL%) | Toluene Insoluble (1) after osmium tetraoxide treatment (mass%) | Average particle size of toluene Insoluble fraction (1) after osmium tetraoxide treatment | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|---|---|---|---|---|---|---|---|
| Styrene-based resin (C) (parts by mass) | Virgin material GPPS | Virgin material (C1) | 19.0E+-4 | | | | | | | | | | | | | | | |
| | | Virgin material (C2) | 28.0E+-4 | | | | | | | | | | | | 50 | | | |
| | | Virgin material (C3) | 38.0E+-4 | | | | | | | | | | | 60 | | | | |
| Additive (parts by mass) | | Antioxidant | | | | | | | 0.15 | 0.15 | 0.15 | 0.15 | 0.15 | 0.15 | 0.15 | 0.15 | 0.15 | 0.15 |
| | | Mold release agent | | | | | | | 0.3 | 0.3 | 0.3 | 0.3 | 0.3 | 0.3 | 0.3 | 0.3 | 0.3 | 0.3 |
| | | Plasticizer | | | | | | | 0.5 | 0.5 | 0.5 | 0.5 | 0.5 | 0.5 | 0.5 | 0.5 | 0.5 | 0.5 |
| Mesh filtration step | | | | | | | | | (80 mesh) | (80 mesh) | (80 mesh) | (80 mesh) | (80 mesh) | (80 mesh) | 80 mesh | (80 mesh) | (80 mesh) | (80 mesh) |

(Additive)

Antioxidant: octadecyl 3-(3',5'-di-t-butyl-4'-hydroxyphenyl)propionate
Mold release agent: zinc stearate
Plasticizer: liquid paraffin

[Examples and Comparative Examples]

[Method of Producing Regenerated styrene-based resin compositions of Examples 1 to 20]

The raw materials listed in the [Raw Materials used in Examples and Comparative Examples] section above were prepared. Specifically, the content of the rubbery polymer particles (a2), the content of the toluene-insoluble fraction (1) after the osmium tetroxide treatment (i.e., mixed substances), and the weight average molecular weight of the polymer matrix portion (a1), contained in the recycled polystyrene-based resins (A1) to (A8), were measured before the melt-kneading was carried out.

In addition, the content of the rubbery polymer particles (b2), and the weight average molecular weight of the polystyrene-based resin (b1), contained in the rubber-modified polystyrene-based resins (B1) to (B7), were measured.

Next, the weight average molecular weight of the virgin material (C1) was measured. Then, in each example, the raw materials were prepared in accordance with the [Raw Materials used in Examples and Comparative Examples] section above and Tables 2-1 to 2-3 below, so that the molecular weight of the obtained regenerated styrene-based resin composition, the content of the rubber component, the content of mixed substances (the toluene-insoluble fraction (1) after the osmium tetroxide treatment), and the weight average molecular weight of the polymer component each had a predetermined value. After the raw materials are weighed, they were blended using a drum tumbler, and then subjected to melt-kneading in a twin-screw extruder (model TEM-26SS, manufactured by Toshiba Machine Co., Ltd.) at a cylinder setting temperature of 220 °C and a screw rotation speed of 200 rpm. The molten resin passed through a screen mesh placed upstream of the breaker plate between the extruder screw tip and the die, and was then extruded as molten strands from the die. The molten strands were water-cooled and cut with a rotary cutter to obtain a pellet-like regenerated styrene-based resin composition of each of Examples 1 to 20. The physical properties of the styrene-based resin compositions in Examples 1 to 20 were measured and evaluated according to the measurement method described above. The results are listed in Tables 2-1 to 2-3.

In the above melt-kneading, the molten material was passed through a screen mesh, if necessary, so that the particle size distribution on the volume basis ($d_{84\%}$ - $d_{16\%}$) was less than 2.

"Production Method of Resin Compositions of Comparative Examples 1 to 6 and Reference Examples 1 to 4"

The raw materials were prepared according to the [Raw Materials used in Examples and Comparative Examples] section above and Table 2-4 below. After the raw materials were weighed, they were blended using a drum tumbler, and then subjected to melt-kneading in a twin-screw extruder (model TEM-26SS, manufactured by Toshiba Machine Co., Ltd.) at a cylinder setting temperature of 220 °C and a screw rotation speed of 200 rpm. The molten strands were extruded from the die. The molten strands were water-cooled and cut with a rotary cutter to obtain a pellet-like resin composition of each of Comparative Examples 1 to 6 and Reference Examples 1 to 4. The physical properties of the resin compositions of Comparative Examples 1 to 6 and Reference Examples 1 to 4 were measured and evaluated according to the measurement method described above. The results are listed in Tables 2-4.

[Table 2-1]

| Table 2-1 | Example 1 | Example 2 | Example 3 | Example 4 | Example 5 | Example 6 |
|---|---|---|---|---|---|---|
| Toluene insoluble fraction after osmium tetraoxide treatment in the entire regenerated styrene-based resin composition (mass%) | 0.05 | 0.01 | 9.6 | 5.0 | 3.5 | 0.1 |

(continued)

| Table 2-1 | Example 1 | Example 2 | Example 3 | Example 4 | Example 5 | Example 6 |
|---|---|---|---|---|---|---|
| Weightaverage molecular weight (Mw) of polymer matrix phase (i.e., polymer component) in the entire regenerated styrene-based resin composition [GPC method] | 22.6E+4 | 23.0E+4 | 22.6E+4 | 22.6E+4 | 20.6E+4 | 19.0E+4 |
| Content of polymer components containing polymer matrix portion (al) and polystyrene resin (bl) of recycled polystyrene-based resin (A) (mass%) | 86.95 | 89.6 | 77.4 | 75.0 | 88.9 | 78.0 |
| Gel % (i.e., content of rubber component, i.e., content of gel component or content of total rubber polymer particles) (mass%) | 13.00 | 10.39 | 12.6 | 20.0 | 7.6 | 21.9 |
| Centent of conjugated diene in the entire regenerated styrene-based resin composition (mass%) | 4.4 | 3.5 | 4.4 | 4.4 | 2.2 | 6.3 |
| Average particle size of all rubbery polymer particles in the entire regenerated styrene-based resin composition ( mm) | 1.7 | 1.7 | 1.7 | 1.7 | 1.6 | 2.3 |
| Average particle size of toluene-insoluble fraction after osmium acid treatment in the entire regenerated styrene-based resin composition ( mm) | 0.03 | 0.02 | 0.15 | 0.12 | 0.1 | 0.1 |
| Particle size distribution: (d84-d16)/2 | 1.18 | 1.17 | 80.23 | 6.90 | 2.45 | 1.13 |
| Melt mass flow rate (g/10 min) [ISO 1133] | 5.2 | 4.2 | 5.1 | 5.2 | 6.0 | 6.5 |
| Tensile yield stress (MPa) [ISO 527-1] | 33 | 38 | 32 | 32 | 36 | 33 |
| Nominal tensile strain at break (%) [ISO 527-1] | 26 | 25 | 22 | 24 | 25 | 30 |
| Flexural modulus (MPa) [ISO 178] | 2,600 | 2,750 | 2,600 | 2,600 | 2,600 | 2,300 |
| Charpy impact strength (Notched) (kJ/m$^2$) [ISO 179] | 12 | 11 | 8.5 | 9.5 | 11 | 13 |
| Load deflection Temperature (°C) [ISO 75-2] | 72 | 74 | 72 | 73 | 72 | 70 |
| Vicat softening temperature (°C) [ISO 306] | 93 | 92 | 94 | 92 | 91 | 90 |
| Chemical resistance (retention ratio of physical property) (%) | 95 | 90 | 95 | 95 | 95 | 95 |
| Weld strength retention ratio (flexural strength) (%) | 85 | 85 | 45 | 60 | 70 | 85 |
| Heat creep resistant charactic [JIS K 7116] | 2.8 | 2.5 | 2.6 | 2.8 | 2.8 | 3.3 |
| External appearance (foreign objects) | ○ | ○ | Δ | Δ | Δ | ○ |
| External appearance (gloss) | ○ | ○ | ○ | ○ | ○ | ○ |

[Table 2-2]

| Table 2-2 | Example 7 | Example 8 | Example 9 | Example 10 | Example 11 | Example 12 | Example 13 |
|---|---|---|---|---|---|---|---|
| Toluene insoluble fraction after osmium tetraoxide treatment in the entire regenerated styrene-based resin composition (mass%) | 0.2 | 0.450 | 0.05 | 1.5 | 1.5 | 1.5 | 0.05 |
| Weightaverage molecular weight (Mw) of polymer matrix phase (i.e., polymer component) in the entire regenerated styrene-based resin composition [GPC method] | 19.0E+4 | 25.0E+4 | 28.0E+4 | 15.0E+4 | 13.0E+4 | 14.0E+4 | 25.0E+4 |
| Content of polymer components containing polymer matrix portion (al) and polystyrene resin (bl) of recycled polystyrene-based resin (A) (mass%) | 81.6 | 88.3 | 93.7 | 85.5 | 86.5 | 86.0 | 87.45 |
| Gel % (i.e., content of rubber component, i.e., content of gel component or content of total rubber polymer particles) (mass%) | 18.2 | 11.2 | 6.30 | 13.0 | 12.0 | 12.5 | 12.5 |
| Centent of conjugated diene in the entire regenerated styrene-based resin composition (mass%) | 4.1 | 3.1 | 2.2 | 4.4 | 4.0 | 4.0 | 4.2 |
| Average particle size of all rubbery polymer particles in the entire regenerated styrene-based resin composition ( mm) | 2.8 | 2.3 | 2.3 | 1.7 | 1.9 | 3.2 | 1.1 |
| Average particle size of toluene-insoluble fraction after osmium acid treatment in the entire regenerated styrene-based resin composition ( mm) | 0.1 | 0.1 | 0.03 | 0.1 | 0.1 | 0.1 | 0.03 |
| Particle size distribution: (d84-d16)/2 | 0.98 | 1.99 | 1.20 | 1.75 | 0.43 | 1.97 | 0.21 |
| Melt mass flow rate (g/10 min) [ISO 1133] | 8.0 | 3.8 | 1.8 | 7.5 | 10 | 8.0 | 4.0 |
| Tensile yield stress (MPa) [ISO 527-1] | 27 | 32 | 38 | 30 | 25 | 30 | 30 |

(continued)

| Table 2-2 | Example 7 | Example 8 | Example 9 | Example 10 | Example 11 | Example 12 | Example 13 |
|---|---|---|---|---|---|---|---|
| Nominal tensile strain at break (%) [ISO 527-1] | 30 | 30 | 25 | 22 | 15 | 27 | 20 |
| Flexural modulus (MPa) [ISO 178] | 2,300 | 2,600 | 2,800 | 2,600 | 2,600 | 2,450 | 2,600 |
| Charpy impact strength (Notched) (kJ/m$^2$) [ISO 179] | 9.0 | 10 | 11 | 9.0 | 8 | 11 | 13 |
| Load deflection Temperature (°C) [ISO 75-2] | 69 | 71 | 73 | 72 | 72 | 72 | 72 |
| Vicat softening temperature (°C) [ISO 306] | 88 | 92 | 92 | 91 | 92 | 92 | 92 |
| Chemical resistance (retention ratio of physical property) (%) | 95 | 100 | 100 | 90 | 90 | 90 | 75 |
| Weld strength retention ratio (flexural strength) (%) | 85 | 82 | 85 | 83 | 86 | 82 | 90 |
| Heat creep resistant charactic [JIS K 7116] | 4.0 | 3.0 | 2.8 | 2.9 | 2.8 | 3.2 | 2.9 |
| External appearance (foreign objects) | ○ | ○ | ○ | ○ | ○ | ○ | ○ |
| External appearance (gloss) | ○ | ○ | ○ | ○ | ○ | Δ | ○ |

[Table 2-3]

| Table 2-3 | Example 14 | Example 15 | Example 16 | Example 17 | Example 18 | Example 19 | Example 20 |
|---|---|---|---|---|---|---|---|
| Toluene insoluble fraction after osmium tetraoxide treatment in the entire regenerated styrene-based resin composition (mass%) | 0.05 | 8.0 | 0.0001 | 0.085 | 8.75 | 4.5 | 6.0 |
| Weightaverage molecular weight (Mw) of polymer matrix phase (i.e., polymer component) in the entire regenerated styrene-based resin composition [GPC method] | 20.0E+4 | 20.6E+4 | 24.5E+4 | 27.1E+4 | 19.0E+4 | 20.5E+4 | 19.5E+4 |
| Content of polymer components containing polymer matrix portion (al) and polystyrene resin (bl) of recycled polystyrene-based resin (A) (mass%) | 83.45 | 76.4 | 85.0 | 96.8 | 59.3 | 80.3 | 75.85 |

(continued)

| Table 2-3 | Example 14 | Example 15 | Example 16 | Example 17 | Example 18 | Example 19 | Example 20 |
|---|---|---|---|---|---|---|---|
| Gel % (i.e., content of rubber component, i.e., content of gel component or content of total rubber polymer particles) (mass%) | 16.5 | 15.6 | 15.0 | 3.15 | 31.95 | 15.7 | 18.15 |
| Centent of conjugated diene in the entire regenerated styrene-based resin composition (mass%) | 6.4 | 5.3 | 5.5 | 0.93 | 12.52 | 4.65 | 6.28 |
| Average particle size of all rubbery polymer particles in the entire regen-erated styrene-based re-sin composition ( mm) | 3.5 | 1.7 | 1.7 | 2.3 | 3.0 | 1.8 | 2.5 |
| Average particle size of toluene-insoluble fraction after osmium acid treatment in the entire regenerated styrene-based resin composition ( mm) | 0.03 | 0.005 | 0.002 | 0.03 | 0.1 | 0.1 | 0.1 |
| Particle size distribution: (d84-d16)/2 | 1.06 | 1.67 | 1.17 | 1.30 | 1.86 | 1.805 | 1.966 |
| Melt mass flow rate (g/10 min) [ISO 1133] | 5.0 | 5.1 | 3.8 | 2.3 | 2.7 | 5.2 | 6.5 |
| Tensile yield stress (MPa) [ISO 527-1] | 24 | 25 | 32 | 43 | 43 | 32 | 31 |
| Nominal tensile strain at break (%) [ISO 527-1] | 35 | 30 | 30 | 6 | 45 | 32 | 33 |
| Flexural modulus (MPa) [ISO 178] | 2,200 | 2,450 | 2,650 | 2950 | 2000 | 2600 | 2500 |
| Charpy impact streneth (Notched) (kJ/m$^2$) [ISO 179] | 14 | 10 | 11 | 3 | 20 | 13 | 15 |
| Load deflection Temperature (°C) [ISO 75-2] | 70 | 69 | 72 | 70 | 69 | 70 | 69 |
| Vicat softening temperature (°C) [ISO 306] | 90 | 89 | 92 | 90 | 89 | 90 | 89 |
| Chemical resistance (retention ratio of physical property) (%) | 95 | 95 | 95 | 80 | 95 | 95 | 100 |
| Weld strength retention ratio (flexural strength) (%) | 85 | 84 | 90 | 80 | 80 | 85 | 80 |
| Heat creep resistant charactic [JIS K 7116] | 4.0 | 3.5 | 2.6 | 2.5 | 5.5 | 3.0 | 3.2 |

(continued)

| Table 2-3 | Example 14 | Example 15 | Example 16 | Example 17 | Example 18 | Example 19 | Example 20 |
|---|---|---|---|---|---|---|---|
| External appearance (foreign objects) | ○ | ○ | ○ | ○ | ○ | ○ | ○ |
| External appearance (gloss) | Δ | ○ | ○ | ○ | Δ | ○ | ○ |

[Table 2-4]

| Table 2-4 | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|
| Toluene insoluble fraction after osmium tetraoxide treatment in the entire regenerated styrene-based resin composition (mass%) | 12 | 12 | 12 | 0.1 | 0.4 | 0.0950 | 0 | 1.0 | 10.0 | 1.0 |
| Weightaverage molecular weight (Mw) of polymer matrix phase (i.e., polymer component) in the entire regenerated styrene-based resin composition [GPC method] | 22.6E+4 | 24. 4E+4 | 21.6E+4 | 9.4E+4 | 36.0E+4 | 27.7E+4 | 22.6E+4 | 21.0E+4 | 21.0E+4 | 27.3E+4 |
| Content of polymer components containing polymer matrix portion (a1) and polystyrene resin (b1) of recycled polystyrene-based resin (A) (mass%) | 75.0 | 73.0 | 77. 6 | 89.1 | 89.6 | 98.855 | 87.0 | 77.0 | 79.0 | 97.9 |
| Gel % (ie., content of rubber component, ie., content of gel component or content of total rubber polymer particles) (mass%) | 13.0 | 15.0 | 10.4 | 10.8 | 10.0 | 1.050 | 13.0 | 22.0 | 11.0 | 1.1 |
| Content of conjugated diene in the entire regenerated styrene-based resin composition (mass%) | 4.4 | 6 | 3.5 | 2.5 | 3.2 | 0.31 | 4.4 | 6 | 3 | 0.3 |

| Table 2-4 | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|
| Average particle size of all rubbery polymer particles in the entire regenerated styrene-based resin composition ( mm) | 1.7 | 1.7 | 1.7 | 2.3 | 2.5 | 2.3 | 1.7 | 2.4 | 1.9 | 1.9 |
| Average particle size of toluene-insoluble fraction after osmium acid treatment in the entire regenerated styrene-based resin composition ( mm) | 0.15 | 0.15 | 0.005 | 0.01 | 0.02 | 0.03 | - | 0.1 | 0.1 | 0.03 |
| Particle size distribution: (d84-d16)/2 | 85.53 | 81.87 | 1.85 | 1.23 | 1.39 | 1.64 | 1.17 | 2.04 | 9.22 | 9.22 |
| Melt mass flow rate (g/10 min) [ISO 11331 | 5.1 | 3 | 5.5 | 50 | 0.2 | 2.3 | 5.2 | 3.5 | 5.5 | 2.4 |
| Tensile yield stress (MPa) [ISO 527-1] | 32 | 32 | 31 | 12 | | 45 | 33 | 32 | 32 | 45 |
| Nominal tensile strain at break (%) [ISO 527-1] | 10 | 15 | 27 | 5 | | 2 | 30 | 26 | 12 | 2 |
| Flexural modulus (MPa) [ISO 178] | 2,600 | 2,250 | 2,200 | 2,700 | | 3100 | 2,600 | 2300 | 2700 | 3100 |
| Charpy impact strength (Notched) (kJ/m$^2$) [ISO 179] | 2.5 | 8 | 12 | 1 | | 1.5 | 12 | 13 | 4 | 1.5 |
| Load deflection Temperature (°C) [ISO 75-2] | 73 | 69 | 69 | 72 | | 70 | 73 | 68 | 70 | 70 |
| Vicat softening temperature (°C) [ISO 306] | 92 | 88 | 88 | 91 | | 90 | 93 | 88 | 90 | 90 |

| Table 2-4 | Comparative Example 1 | Comparative Example 2 | Comparative Example 3 | Comparative Example 4 | Comparative Example 5 | Comparative Example 6 | Reference Example 1 | Reference Example 2 | Reference Example 3 | Reference Example 4 |
|---|---|---|---|---|---|---|---|---|---|---|
| Chemical resistance (retention ratio of physical property) (%) | 95 | 100 | 95 | 70 | | 65 | 100 | 85 | 85 | 65 |
| Weld strength retention ratio (flexural strength) (%) | 45 | 45 | 75 | 80 | | 50 | 86 | 70 | 45 | 40 |
| Heat creep resistant charactic [JIS K 7116] | 2.8 | 4.5 | 5.0 | 6.0 | | 2.5 | 2.7 | 4.0 | 2.5 | 2.5 |
| External appearance (foreign objects) | x | x | ○ | ○ | | ○ | ○ | Δ | x | Δ |
| External appearance (gloss) | ○ | ○ | ○ | ○ | | ○ | ○ | ○ | ○ | ○ |

EP 4 603 538 A1

"Production and Evaluation of Cartridges of Examples 21 to 26

Cartridge housings (cartridge main bodies) were produced using the regenerated styrene-based resin compositions produced in the above examples. Specifically, the cartridge housing had a box-shaped structure with ribs arranged in a lattice pattern (dimensions: length: 260 mm × depth: 80 mm × height: 80 mm). The cartridge housing was produced by molding the regenerated styrene-based resin composition produced in the examples listed in Table 3 using a three-plate mold with pin gates at two points and a cold runner.

The practical creep evaluation was conducted on the obtained cartridge housing under the following conditions. The results are summarized in Table 3.

<Evaluation of Practical Creep Characteristic>

A positioning pin inside the cartridge housing was fixed to a jig. Then, the cartridge housing was placed in an oven at 60 °C under a load with a weight of 4.6 kg (iron weight with a diameter of 50 mm and height of 300 mm) applied to the center part in the longitudinal direction. After 100 hours, the deformation of the center part of the cartridge housing (mm) was measured. If the deformation was within 0.5 mm, the result was evaluated as a pass (O), and if the deformation exceeded 0.5 mm, the result was evaluated as a fail (x).

"Cartridge of Comparative Example 7"

The cartridge housing was produced using the resin composition according to a method similar to those of Examples 21 to 26 above. The resin composition used in Comparative Example 7 is listed in Table 3.

[Table 3]

| Table 3 | Example 21 | Example 22 | Example 23 | Example 24 | Example 25 | Example 26 | Comparative Example 7 |
|---|---|---|---|---|---|---|---|
| Type of regenerated styrene-based resin composition used | Example 1 | Example 2 | Example 9 | Example 15 | Example 6 | Example 19 | Commercial products |
| Recycled polystyrene-based resin (A) (parts by mass) | 50 (Resin (Al)) | 60 (Resin (A2)) | 50 (Resin (A1)) | 40 (Resin (A6)) | 50 (Resin (A10)) | 45 (Resin (A12)) | |
| Rubber modified styrene-based resin (B) (parts by mass) | 50 (Resin (B1)) | 40 (Resin (B1)) | 30 (Resin (B3)) | 60 (Resin (B1)) | 50 (Resin (B1)) | 30 (Resin (B2)) | 90 (Resin (B1)) |
| Styrene-based resin (C) (parts by mass) | | | 20 (Resin (C3)) | | | 25 (Resin (C1)) | 10 (Resin (C1)) |
| Practical creep characteristic | ○ | ○ | ○ | ○ | ○ | ○ | x |

REFERENCE SIGNS LIST

1     Cartridge
2     Toner cartridge
3     Toner housing
4     Charging means
5     Photosensitive drum
6     Magnetic roller
7     Drum Cartridge main body
8     Cleaning roller
9     Developing unit
10    Drum cartridge
11    Transfer roller

12    Transport roller

**Claims**

1.  A regenerated styrene-based resin composition comprising a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase,
    more than 0 to 10 mass% of the toluene-insoluble fraction (1) after the osmium tetroxide treatment being contained relative to an entire regenerated styrene-based resin composition.

2.  The regenerated styrene-based resin composition according to claim 1, comprising

    less than 55 to 97.9 mass% of a polymer component including the polymer matrix portion (a1) of the recycled polystyrene-based resin (A) and the polystyrene-based resin (b1);
    2.1 to 35 mass% of a rubber component including the rubbery polymer particles (b2); and
    more than 0 to 10 mass% of the toluene-insoluble fraction (1) after the osmium tetroxide treatment after subjecting the recycled polystyrene-based resin (A) to an osmium tetroxide treatment.

3.  The regenerated styrene-based resin composition according to claim 1 or 2, further comprising a styrene-based resin (C) that does not contain rubbery polymer particles.

4.  The regenerated styrene-based resin composition according to claim 1 or 2, wherein a weight average molecular weight (Mw) is in a range of 100,000 to 350,000.

5.  The regenerated styrene-based resin composition according to claim 1 or 2, wherein an average particle size of all rubbery polymer particles in the regenerated styrene-based resin composition is in a range of 1.6 to 3.2 $\mu$m.

6.  The regenerated styrene-based resin composition according to claim 1 or 2, wherein the all rubbery polymer particles in the regenerated styrene-based resin composition comprise conjugated diene-based monomer units, and a content of the conjugated diene-based monomer units is 2 to 15 mass% relative to the entire regenerated styrene-based resin composition.

7.  The regenerated styrene-based resin composition according to claim 1 or 2, comprising one or more selected from the group consisting of antioxidants, pigments, flame retardants, additives, mineral oils, vegetable oils, and lubricants.

8.  The regenerated styrene-based resin composition according to claim 1 or 2, wherein a content of the all rubbery polymer particles in the regenerated styrene-based resin composition is 2.1 to 35 mass% relative to the entire regenerated styrene-based resin composition.

9.  A method of producing a regenerated styrene-based resin composition according to claim 1 or 2, comprising:

    a step (I) of preparing a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase; and
    a step (II) of melt-kneading the recycled polystyrene-based resin (A) and the rubber-modified polystyrene-based resin (B).

10. A molded article produced by molding the regenerated styrene-based resin composition according to claim 1 or 2.

11. A cartridge that can be attached to and detached from an image production apparatus that produces multicolor or monochrome images on a recording medium by an electrophotographic method, the cartridge comprising:

    a cartridge main body, a photosensitive drum, and charging means for charging a surface of the photosensitive drum,
    wherein the cartridge main body comprises a regenerated styrene-based resin composition comprising a recycled polystyrene-based resin (A) that includes a toluene-insoluble fraction (1) after an osmium tetroxide treatment, and a rubber-modified polystyrene-based resin (B) that comprises rubbery polymer particles (b2) forming a domain phase and a polystyrene-based resin (b1) forming a polymer matrix phase, and more than 0 to 10 mass% of the toluene-insoluble fraction (1) after the osmium tetroxide treatment is contained relative to the entire regenerated styrene-based resin composition.

EP 4 603 538 A1

*FIG. 1*

FIG. 2

EP 4 603 538 A1

FIG. 3

## INTERNATIONAL SEARCH REPORT

| International application No. |
| --- |
| **PCT/JP2023/037111** |

| | |
| --- | --- |
| **A.** | **CLASSIFICATION OF SUBJECT MATTER** |

*C08L 25/04*(2006.01)i; *C08J 5/00*(2006.01)i; *C08J 11/00*(2006.01)i; *C08L 51/04*(2006.01)i
FI:    C08L25/04; C08J5/00 CET; C08J11/00 CET; C08L51/04

According to International Patent Classification (IPC) or to both national classification and IPC

| | |
| --- | --- |
| **B.** | **FIELDS SEARCHED** |

Minimum documentation searched (classification system followed by classification symbols)

   C08L25/04; C08J5/00; C08J11/00; C08L51/04

Documentation searched other than minimum documentation to the extent that such documents are included in the fields searched

   Published examined utility model applications of Japan 1922-1996
   Published unexamined utility model applications of Japan 1971-2023
   Registered utility model specifications of Japan 1996-2023
   Published registered utility model applications of Japan 1994-2023

Electronic data base consulted during the international search (name of data base and, where practicable, search terms used)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| X | JP 2011-63689 A (ASAHI KASEI CHEMICALS CORP) 31 March 2011 (2011-03-31) claims, paragraphs [0025]-[0039], [0055], [0060], [0071]-[0076], examples, paragraph [0109] | 1-11 |
| A | JP 2021-143282 A (MITSUBISHI CHEM CORP) 24 September 2021 (2021-09-24) | 1-11 |
| A | JP 2018-87261 A (SHARP KK) 07 June 2018 (2018-06-07) | 1-11 |
| A | JP 2007-62056 A (MITSUBISHI PLASTICS IND LTD) 15 March 2007 (2007-03-15) | 1-11 |
| A | JP 2009-149768 A (MITSUBISHI ELECTRIC CORP) 09 July 2009 (2009-07-09) | 1-11 |
| A | JP 2002-82418 A (FUJI PHOTO FILM CO LTD) 22 March 2002 (2002-03-22) | 1-11 |

☐ Further documents are listed in the continuation of Box C.    ☑ See patent family annex.

| | | | |
| --- | --- | --- | --- |
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **13 December 2023** | **26 December 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

International application No.

**PCT/JP2023/037111**

| Patent document cited in search report | | | Publication date (day/month/year) | Patent family member(s) | Publication date (day/month/year) |
|---|---|---|---|---|---|
| JP | 2011-63689 | A | 31 March 2011 | (Family: none) | |
| JP | 2021-143282 | A | 24 September 2021 | (Family: none) | |
| JP | 2018-87261 | A | 07 June 2018 | (Family: none) | |
| JP | 2007-62056 | A | 15 March 2007 | (Family: none) | |
| JP | 2009-149768 | A | 09 July 2009 | (Family: none) | |
| JP | 2002-82418 | A | 22 March 2002 | (Family: none) | |

Form PCT/ISA/210 (patent family annex) (January 2015)

**EP 4 603 538 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020007424 A
- JP 2018087261 A